# EUROPÄISCHE PATENTSCHRIFT

(11) **EP 2 303 467 B1**
(45) Veröffentlichungstag und Bekanntmachung des Hinweises auf die Patenterteilung: **25.05.2016**
(21) Anmeldenummer: 09780665.7
(22) Anmeldetag: 15.07.2009
(51) Int. Cl.: B05B 13/02, B05B 15/12, B05C 3/10

(54) **ZWISCHENLAGER ZUM ZWISCHENLAGERN VON ZU LACKIERENDEN GEGENSTÄNDEN**
TEMPORARY STORAGE FOR TEMPORARILY STORING OBJECTS TO BE PAINTED
SYSTÈME DE STOCKAGE INTERMÉDIAIRE POUR LE STOCKAGE INTERMÉDIAIRE D'OBJETS À PEINDRE

(30) Priorität: 29.07.2008 DE 102008036322
(43) Veröffentlichungstag der Anmeldung: 06.04.2011
(73) Patentinhaber: Dürr Systems GmbH, 74321 Bietigheim-Bissingen (DE)
(72) Erfinder: SCHAEFER, Wolf-Hasso, 75233 Tiefenbronn (DE)
(74) Vertreter: Hoeger, Stellrecht & Partner Patentanwälte mbB
(86) Internationale Anmeldenummer: PCT/EP2009/059102
(87) Internationale Veröffentlichungsnummer: WO 2010/012599

(56) Entgegenhaltungen:
- DE-A1- 10 232 402
- DE-A1- 19 630 290
- GB-A- 2 305 376

## Beschreibung

Die vorliegende Erfindung betrifft ein Zwischenlager zum Zwischenlagern von zu lackierenden Gegenständen in Form von Fahrzeugkarosserien und/oder von Teilen von Fahrzeugkarosserien und/oder zum Fördern von zu lackierenden Gegenständen in Form von Fahrzeugkarosserien und/oder von Teilen von Fahrzeugkarosserien von einem Prozessabschnitt einer Lackieranlage zu einem anderen Prozessabschnitt der Lackieranlage.

Dabei können die Teile von Fahrzeugkarosserien insbesondere Fahrerhäuser für Lastkraftwagen sein.

Die Gebäudeabmessungen einer Lackieranlage zum Lackieren von Fahrzeugkarosserien werden bestimmt durch die zur Lackierung der Karosserien erforderlichen Prozessvorrichtungen, wie beispielsweise Tauchbehandlungsanlagen, Trockner, Spritzkabinen und Arbeitsplätze, sowie durch die erforderlichen fördertechnischen und lüftungstechnischen Einrichtungen einschließlich der Materialversorgung und des Umweltmanagements für Abwasser, Abfälle und Abluft.

Dabei können die Prozessvorrichtungen nicht in ihren Dimensionen, sondern nur in ihrer Lage innerhalb der Lackieranlage verändert werden.

Die fördertechnischen Einrichtungen dienen nicht selbst zur Oberflächenbehandlung der Fahrzeugkarosserien, sondern ausschließlich dazu, die Karosserien zwischen den einzelnen Prozessabschnitten zu transportieren und/oder erforderliche Funktionen wie Farbsortierung der Karosserien und Leerziehen von Prozessabschnitten zu realisieren.

Diese fördertechnischen Einrichtungen werden bei den bislang bekannten Lackieranlagen ausnahmslos auf vorher definierten Geschossflächen innerhalb der Lackieranlage aufgebaut. Diese Geschossflächen müssen im Gebäude der Lackieranlage bereitgestellt werden.

Die Lage der Pufferspeicher für die Farbsortierung und das Leerziehen von Prozessabschnitten wird sowohl durch den Prozessablauf als auch durch die zur Verfügung stehenden Freiflächen in der Lackieranlage bestimmt. Die Anordnung der Speicher wird in mehreren Ebenen durchgeführt, um die Grundfläche des Lackierereigebäudes möglichst gering zu halten.

Die lüftungstechnischen Einrichtungen werden bei den bekannten Lackieranlagen auf dafür speziell vorgesehenen Stahlbühnen oder gar auf speziellen Geschossebenen der Lackieranlage (Penthouse) innerhalb des Lackierereigebäudes aufgebaut.

Vorbehandlungsanlagen und Anlagen für die kataphoretische Tauchlackierung (im Folgenden als "KTL" abgekürzt) werden üblicherweise in zwei Ebenen aufgebaut. Dabei stehen die schweren, mit Prozessflüssigkeit gefüllten Tauchbehälter meistens über den jeweiligen Gegenbehältern. Hierfür sind schwere Stahlbühnen oder Betondecken erforderlich.

Die Trockner und deren Heizaggregate geben durch ihre Abstrahlungswärme ständig Wärme an die Umgebung ab. Dieser unerwünschte, aber nicht vermeidbare Wärmeeintrag in die Halle der Lackiererei darf die Arbeitsbereiche nicht nachteilig beeinflussen. Deshalb werden bei den bekannten Lackieranlagen die Trockner und deren Heizaggregate jeweils auf Bühnen oder Hallenebenen oberhalb der Arbeitsplätze aufgebaut.

Um die fördertechnischen und anlagentechnischen Funktionen der Lackieranlage realisieren zu können, wird bei bekannten Lackieranlagen das Lackierereigebäude über bis zu vier Ebenen sowie auf einer wesentlich größeren Grundfläche, als dies für die reinen Lackierprozesse erforderlich wäre, errichtet.

Das Lackierergebäude muss statisch nach den Lasten, welche durch die Anlagentechnik sowie die Fördertechnik mit den darauf transportierten Karosserien sowie die zur Aufstellung erforderlichen Stahl- oder Betonebenen erforderlich sind, ausgelegt werden.

Durch den Transport von Karosserien in der Lackieranlage sowie durch die hierfür erforderliche bewegte Fördertechnik wie beispielsweise Hubstationen, Verschiebewagen, Schwenk- oder Drehtische werden Gefahrenstellen in der Lackieranlage verursacht. Es müssen daher in großem Umfang Sicherheitseinrichtungen vorgesehen werden, um den entsprechenden Gesetzesanforderungen gerecht zu werden und Personengefährdungen auszuschließen.

Bei Fluchtwegkonzepten aus den bekannten Lackieranlagen müssen aufgrund der Komplexität der Lackierereigebäude in vielen Fällen Kompromisse geschlossen werden.

Die Terminabläufe bei der Erstellung bekannter Lackieranlagen werden durch die mehrstöckige Bauweise der Gebäude und die dadurch schwierige Montage und Inbetriebnahme der Anlagentechnik bestimmt.

Die DE 103 50 846 A1 offenbart eine Fertigungseinrichtung für die Herstellung von Kraftfahrzeugen mit einem Fertigungsbereich, der aus einem Grundkarossen-Fertigstellungsbereich, einem Lackierbereich und einem Montagebereich besteht, und mit einem einzigen, zentralen Karosserienlager als Karosserienlogistikzentrum, in das Karosserien mit unterschiedlichem Fertigungsstatus einlagerbar sind.

Die GB 2 305 376 A offenbart ein Zwischenlager zum Zwischenlagern von zu lackierenden Gegenständen in einer Lackieranlage.

Die DE 102 32 402 A1 offenbart eine Lackieranlage mit einem Zwischenlager gemäß dem Oberbegriff von Anspruch 1.

Die DE 196 30 290 A1 offenbart eine Lackieranlage zum Lackieren von Fahrzeugkarosserien, wobei lackierte Fahrzeugkarosserien nach dem Durchlaufen eines Trockenofens in jeweils eine separate Schutzabdeckung eingebracht werden, so dass die Fahrzeugkarosserien beim Weiterfördern längs einer Förderstrecke eingeschlossen und damit vor einer Verschmutzung geschützt sind. Die Schutzabdeckung umfasst eine Bodenplatte mit Entlüftungsöffnungen, in die Luftfilter eingesetzt sind, und eine auf die Bodenplatte abgesenkte Haube.

Der vorliegenden Erfindung liegt die Aufgabe zugrunde, ein Zwischenlager zum Zwischenlagern von zu lackierenden Gegenständen der eingangs genannten Art zu schaffen, welches es erlaubt, die zu lackierenden Gegenstände auch über einen längeren Zeitraum, beispielsweise während eines Schichtwechsels, über Nacht oder über ein Wochenende, in dem Zwischenlager einzulagern, ohne die Qualität der Lackierung der zu lackierenden Gegenstände zu beeinträchtigen.

Diese Aufgabe wird durch ein Zwischenlager zum Zwischenlagern von zu lackierenden Gegenständen nach Anspruch 1 gelöst.

Durch die Ausbildung des Zwischenlagers als Reinraumbereich wird verhindert, dass Schmutz und Staub aus anderen Bereichen der Lackieranlage zu dem im Zwischenlager befindlichen zu lackierenden Gegenständen gelangen können.

Dadurch werden die im Zwischenlager eingelagerten zu lackierenden Gegenstände vor Staubablagerungen geschützt, was die nachfolgenden Prozessschritte vereinfacht.

Das erfindungsgemäße Zwischenlager kann beispielsweise als ein Hochregallager ausgebildet sein.

Um eine Verschmutzung der im Zwischenlager befindlichen zu lackierenden Gegenstände mit Verunreinigungen aus anderen Bereichen der Lackieranlage zu verhindern, ist vorgesehen, dass das Zwischenlager mit einem Gehäuse versehen ist, welches das Zwischenlager von dem Gebäudeinnenraum einer Gebäudehülle, in welcher das Zwischenlager (und gegebenenfalls andere Bestandteile der Lackieranlage) angeordnet ist, abtrennt.

Innerhalb des Zwischenlagers ist ein Luft-Überdruck (relativ zu dem in der Umgebung des Zwischenlagers herrschenden Luftdruck) erzeugbar. Auf diese Weise wird erreicht, dass Luft nur aus dem Zwischenlager in die Umgebung, nicht aber aus der Umgebung in das Zwischenlager strömt, wodurch ein Eintrag von Verunreinigungen in das Zwischenlager mittels aus der Umgebung einströmender Luft vermieden wird.

Um den Luftaustausch zwischen dem Innenraum des Zwischenlagers und dessen Umgebung möglichst gering zu halten, kann vorgesehen sein, dass das Zwischenlager mindestens einen Eingangstunnel umfasst, durch welchen zu lackierende Gegenstände in den Innenraum des Zwischenlagers förderbar sind, und/oder mindestens einen Ausgangstunnel umfasst, durch welchen zu lackierende Gegenstände aus dem Zwischenlager heraus förderbar sind.

Bei einer bevorzugten Ausgestaltung des Zwischenlagers ist vorgesehen, dass dasselbe mindestens einen Eingangstunnel und mindestens einen Ausgangstunnel umfasst, wobei mindestens ein Eingangstunnel und mindestens ein Ausgangstunnel des Zwischenlagers auf unterschiedlichen Höhen liegen. Durch die Verlagerung von fördertechnischen Funktionen in das Zwischenlager wird der Umfang der außerhalb des Zwischenlagers in der Gebäudehülle der Lackieranlage erforderlichen Fördertechnik deutlich reduziert.

Zur lufttechnischen Abtrennung des Innenraums des Zwischenlagers von der Umgebung des Zwischenlagers ist es ferner günstig, wenn das Zwischenlager mindestens eine Schleuse und mindestens eine Vorrichtung zum Erzeugen eines Luftstroms durch die Schleuse umfasst.

Der die Schleuse durchsetzende Luftstrom kann dabei insbesondere in einem Umluftkreislauf geführt werden.

Eine solche Schleuse kann insbesondere in einem Eingangstunnel und/oder einem Ausgangstunnel des Zwischenlagers vorgesehen sein.

Wenn das Zwischenlager mindestens ein Lagerfach umfasst, das mit einer Abdeckung zum Schutz eines an einem Lagerplatz des Zwischenlagers angeordneten zu lackierenden Gegenstandes versehen ist, so wird hierdurch erreicht, dass ein an dem Lagerplatz des Zwischenlagers angeordneter zu lackierender Gegenstand vor eventuell herunterfallendem Schmutz geschützt ist.

Eine solche Abdeckung kann insbesondere eine Abdeckfolie oder Schutzfolie umfassen.

Eine solche Abdeckfolie oder Schutzfolie kann insbesondere aus einem geeigneten Kunststoffmaterial, beispielsweise aus einem Polyethylenmaterial, hergestellt sein.

Vorzugsweise entspricht die eingesetzte Abdeckung den geltenden Brandschutzvorschriften.

Das erfindungsgemäße Zwischenlager eignet sich insbesondere zur Verwendung in einer Lackieranlage zum Lackieren von zu lackierenden Gegenständen in Form von Fahrzeugkarosserien und/oder von Teilen von Fahrzeugkarosserien, insbesondere von Fahrerhäusern für Lastkraftwagen.

Eine solche Lackieranlage umfasst vorzugsweise eine Gebäudehülle, die einen Gebäudeinnenraum umschließt, in welchem mindestens ein Behandlungsbereich zum Behandeln eines zu lackierenden Gegenstandes und das mindestens eine Zwischenlager angeordnet sind, wobei das Zwischenlager als ein von dem übrigen Gebäudeinnenraum abgetrennter Reinraumbereich ausgebildet ist.

Bei einer bevorzugten Ausgestaltung der Lackieranlage ist vorgesehen, dass die Lackieranlage ein erstes Förderniveau, auf dem zu lackierende Gegenstände durch mindestens einen offenen Behandlungsbereich förderbar sind, und mindestens ein zweites Förderniveau, von dem aus zu lackierende Gegenstände in mindestens ein Tauchbecken eintauchbar sind, umfasst, wobei mindestens ein zu lackierender Gegenstand von einem Förderniveau der Lackieranlage in das Zwischenlager hinein und später aus dem Zwischenlager heraus in ein anderes Förderniveau der Lackieranlage förderbar ist.

Dabei können die Förderniveaus, von welchen der zu lackierende Gegenstand in das Zwischenlager hinein bzw. in welche der zu lackierende Gegenstand aus dem Zwischenlager heraus gefördert wird, mit dem ersten oder zweiten Förderniveau der Lackieranlage übereinstimmen oder gegebenenfalls auch weitere Förderniveaus der Lackieranlage umfassen.

Das erste und das zweite Förderniveau der Lackieranlage liegen auf unterschiedlichen Höhen bezogen auf den Boden der Gebäudehülle der Lackieranlage.

Vorzugsweise liegt das erste Förderniveau unter dem zweiten Förderniveau der Lackieranlage.

Der Höhenabstand des zweiten Förderniveaus gegenüber dem ersten Förderniveau ist vorzugsweise größer als die größte Höhe der zu lackierenden Gegenstände.

Vorzugsweise beträgt der Höhenabstand zwischen dem zweiten Förderniveau und dem ersten Förderniveau mindestens ungefähr 4 m.

Besonders günstig ist es, wenn das erste Förderniveau auf der Höhe der Erdgeschossebene der Gebäudehülle der Lackieranlage liegt.

Durch die vorstehend beschriebene Ausgestaltung der Lackieranlage ist die Lackieranlage einfach und übersichtlich aufgebaut, kommt mit vergleichsweise wenig fördertechnischen Anlagen aus und ist mit geringem Zeit- und Materialaufwand herstellbar.

Das erfindungsgemäße Zwischenlager kann zwischen mindestens zwei Prozessabschnitten der Lackieranlage so angeordnet sein, dass mindestens ein Prozessabschnitt an dem Zwischenlager endet und mindestens ein darauffolgender Prozessabschnitt an dem Zwischenlager beginnt.

In dem Zwischenlager können vorzugsweise eine oder mehrere der folgenden fördertechnischen Funktionen ausgeführt werden:
- Zu lackierende Gegenstände können zwischen verschiedenen Förderniveaus der Lackieranlage durch Anheben bzw. Absenken der zu lackierenden Gegenstände transportiert werden.
- Zu lackierende Gegenstände können beim Leerziehen von Behandlungsbereichen der Lackieranlage in das Zwischenlager eingelagert werden.
- In dem Zwischenlager zwischengelagerte, zu lackierende Gegenstände können für die Behandlung im dem Zwischenlager nachfolgenden Prozessabschnitt der Lackieranlage aus dem Zwischenlager ausgelagert werden.
- Durch Änderung der Auslagerreihenfolge der zu lackierenden Gegenstände gegenüber deren Einlagerreihenfolge können mit Hilfe des Zwischenlagers Farbblöcke für die nachfolgende Lackierung der zu lackierenden Gegenstände gebildet werden.
- Nachzubearbeitende zu lackierende Gegenstände können im Zwischenlager ablaufoptimiert sortiert werden.
- Die in der Durchlaufrichtung der zu lackierenden Gegenstände vor bzw. hinter dem Zwischenlager liegenden Prozessabschnitte der Lackieranlage können bei Anlagenstörungen voneinander entkoppelt werden.
- Ferner können die in der Durchlaufrichtung der zu lackierenden Gegenstände vor bzw. hinter dem Zwischenlager liegenden Prozessabschnitte der Lackieranlage im Falle unterschiedlicher Arbeitszeiten in den verschiedenen Prozessabschnitten voneinander entkoppelt werden.

Erfindungsgemäß umfasst das Zwischenlager mehrere wahlfrei belegbare Lagerfächer für zu lackierende Gegenstände. In diesem Fall kann die Auslagerungsreihenfolge der zu lackierenden Gegenstände gegenüber der Einlagerungsreihenfolge im Zwischenlager geändert werden, um Farbblöcke zu bilden und/oder nachzubearbeitende zu lackierende Gegenstände ablaufoptimiert zu sortieren.

Ferner ist es möglich, diejenigen zu lackierenden Gegenstände, welche als Nächstes aus dem Zwischenlager ausgelagert werden sollen, möglichst nahe an einer Auslagerposition des Zwischenlagers zu lagern.

Besonders günstig ist es, wenn zu lackierende Gegenstände auf dem zweiten Förderniveau durch mindestens einen Trockner der Lackieranlage förderbar sind. In diesem Fall können die Heizaggregate für die Trocknerbeheizung unterhalb der Trockner auf dem ersten Förderniveau, vorzugsweise auf der Erdgeschossebene der Gebäudehülle (Höhe 0,0 m), aufgebaut werden.

Vorzugsweise ist mindestens ein zu lackierender Gegenstand aus einem Trockner auf dem zweiten Förderniveau in das Zwischenlager hinein förderbar. Hierdurch wird erreicht, dass der frisch lackierte und getrocknete Gegenstand sofort den Reinraumbereich im Innenraum des Zwischenlagers erreicht, bevor sich Staub an dem Gegenstand absetzen kann.

Ferner ist es günstig, wenn zu lackierende Gegenstände auf dem zweiten Förderniveau durch mindestens eine Lack-Spritzkabine förderbar sind. In diesem Fall kann die betreffende Lack-Spritzkabine auf einer Stahlbaubühne aufgebaut sein, deren Bühnenniveau sich nach der minimal erforderlichen Bauhöhe für die Lacknebelauswaschung richtet. Die Lacknebelauswaschung kann direkt unter der Lack-Spritzkabine auf dem ersten Förderniveau, vorzugsweise auf der Erdgeschossebene der Gebäudehülle (Höhe 0,0 m), angeordnet werden. Die Lackschlammentsorgung wird vorzugsweise in Gruben unter der Spritzkabine angeordnet.

Ferner ist es günstig, wenn zu lackierende Gegenstände auf dem ersten Förderniveau durch mindestens eine Unterbodenschutz-Beschichtungsanlage förderbar sind. In einer solchen Unterbodenschutz-Beschichtungsanlage befinden sich Arbeitsplätze für menschliche Arbeiter, die auf dem ersten Förderniveau, vorzugsweise auf der Erdgeschossebene der Gebäudehülle (Höhe 0,0 m), besonders leicht zu erreichen sind.

Auch die Fluchtwege können bei Anordnung der Arbeitsplätze für menschliche Arbeiter auf dem ersten Förderniveau besonders kurz gehalten werden.

Ferner ist es günstig, wenn mindestens eine Abtrennvorrichtung zum Abtrennen von Lack-Overspray aus der Abluft einer Lack-Spritzkabine und/oder mindestens eine Vorrichtung zum Entsorgen von Lackschlamm auf dem ersten Förderniveau angeordnet ist.

In diesem Fall kann eine Lack-Spritzkabine direkt über der Abtrennvorrichtung zum Abtrennen von Lack-Overspray aus der Abluft der Lack-Spritzkabine und/oder direkt über der Vorrichtung zum Entsorgen von Lackschlamm auf dem zweiten Förderniveau der Lackieranlage angeordnet werden.

Ferner ist es günstig, wenn mindestens eine Zuluftanlage zum Versorgen mindestens einer Lack-Spritzkabine mit Zuluft auf dem ersten Förderniveau angeordnet ist.

Durch die Anordnung auf dem ersten Förderniveau ist die Zuluftanlage besonders einfach für Wartungszwecke (beispielsweise für einen Filterwechsel) und/oder für Reparaturzwecke zugänglich.

Vorzugsweise wird die Zuluftanlage auf der Erdgeschossebene der Gebäudehülle (Höhe 0,0 m) angeordnet. Die Anbindung der Zuluftanlage an eine von der Zuluftanlage mit Zuluft versorgte Spritzkabine kann über einen Zuluftkanal erfolgen.

Ferner kann vorgesehen sein, dass die Lackieranlage mindestens eine Abluftanlage zum Abführen von Abluft aus mindestens einer Lack-Spritzkabine umfasst, wobei die Abluftanlage außerhalb der Gebäudehülle auf der Höhe des ersten Förderniveaus, vorzugsweise auf der Erdgeschossebene der Gebäudehülle (Höhe 0,0 m), angeordnet ist. Die Anbindung einer solchen Abluftanlage an die Lack-Spritzkabine kann über mindestens einen Abluftkanal erfolgen, welcher vorzugsweise unterhalb der Erdgeschossebene der Gebäudehülle der Lackieranlage verläuft.

Die Abluftanlage kann mindestens einen Ventilator enthalten.

Ferner kann die Abluftanlage über mindestens einen weiteren Kanal mit einem Abluftkamin verbunden sein.

Bei einer bevorzugten Ausgestaltung der Lackieranlage ist vorgesehen, dass mindestens ein Heizaggregat zum Beheizen mindestens eines Trockners auf dem ersten Förderniveau angeordnet ist. Hierdurch wird vermieden, dass die Heizaggregate auf Bühnen oder zusätzlichen Hallenebenen über den Arbeitsplätzen aufgebaut werden müssen.

Besonders günstig ist es, wenn sämtliche Prozessvorrichtungen der Lackieranlage, d.h. sämtliche Vorrichtungen, mit denen eine Behandlung der zu lackierenden Gegenstände durchgeführt wird (Behandlungsvorrichtungen) oder die für den Betrieb dieser Behandlungsvorrichtungen erforderlich sind, von dem ersten Förderniveau aus montiert sind.

Als Prozessvorrichtungen im Sinne dieser Beschreibung und der beigefügten Ansprüche gelten insbesondere Tauchbecken, Trockner, Kühlzonen, Spritzkabinen, Abdichtungs-Arbeitsplätze, Unterbodenschutz-Beschichtungsanlagen, Kontroll-Arbeitsplätze und Nacharbeits-Vorbereitungs-Arbeitsplätze als Behandlungsvorrichtungen sowie Heizaggregate, Zuluftanlagen und Farbnebelauswaschanlagen als für den Betrieb dieser Behandlungsvorrichtungen erforderliche Vorrichtungen.

Fördervorrichtungen gelten in dieser Beschreibung und in den beigefügten Ansprüchen nicht als Prozessvorrichtungen der Lackieranlage.

Besonders günstig ist es, wenn mindestens ein Gegenbehälter mindestens eines Tauchbeckens neben dem betreffenden Tauchbecken auf dem ersten Förderniveau angeordnet ist.

Vorzugsweise sind zylindrische stehende Behälter einzusetzen, da diese einfacher herzustellen und zu reinigen sind.

Besonders günstig ist es, wenn die Lackieranlage außer dem ersten Förderniveau auf der Erdgeschossebene der Gebäudehülle keine weitere Geschossebene aufweist.

Ferner ist es von Vorteil, wenn die Lackieranlage mindestens zwei Zwischenlager umfasst, mittels welcher zu lackierende Gegenstände von einem Förderniveau der Lackieranlage auf ein anderes Förderniveau der Lackieranlage förderbar sind.

Die mindestens zwei Zwischenlager können dabei insbesondere als zwei dezentrale Hochregallager ausgebildet sein.

Durch die Verlagerung von fördertechnischen Funktionen in die Zwischenlager wird der Umfang der außerhalb der Zwischenlager in der Gebäudehülle der Lackieranlage erforderlichen Fördertechnik deutlich reduziert.

Außerdem können die Prozessabschnitte der Lackieranlage so ausgebildet sein, dass jeder Prozessabschnitt an einem Zwischenlager endet und/oder an einem Zwischenlager beginnt.

Die erfindungsgemäße Lackieranlage ist besonders einfach zu erstellen, wenn jede Prozessvorrichtung der Lackieranlage, d.h. jede Vorrichtung, mit der eine Behandlung der zu lackierenden Gegenstände durchgeführt wird (Behandlungsvorrichtung) oder die für den Betrieb einer solchen Behandlungsvorrichtung erforderlich ist, entweder auf dem ersten Förderniveau angeordnet ist oder an einem Gerüst angeordnet ist, dass sich von einem auf dem ersten Förderniveau angeordneten Boden der Gebäudehülle aus nach oben erstreckt. In diesem Fall entfällt die Notwendigkeit, in der Gebäudehülle der Lackieranlage außer der Erdgeschossebene zusätzliche Geschossebenen vorzusehen.

Ein besonders günstiges Layout der Prozessabschnitte der Lackieranlage wird erhalten, wenn mindestens ein Zwischenlager unmittelbar benachbart zu einer Wand der Gebäudehülle angeordnet ist.

Bei Vorhandensein mehrerer Zwischenlager sind dieselben vorzugsweise alle benachbart zu derselben Außenwand der Gebäudehülle angeordnet.

Bei einer bevorzugten Ausgestaltung der Lackieranlage ist vorgesehen, dass alle Prozessvorrichtungen der Lackieranlage, d.h. alle Vorrichtungen, mit denen eine Behandlung der zu lackierenden Gegenstände durchgeführt wird (Behandlungsvorrichtungen) oder die für den Betrieb dieser Behandlungsvorrichtungen erforderlich sind, auf dem ersten Förderniveau oder auf dem zweiten Förderniveau der Lackieranlage angeordnet sind. Hierdurch wird ein besonders einfacher Aufbau des Förderweges der zu lackierenden Gegenstände durch die Lackieranlage erzielt.

Auch in diesem Fall kann die Lackieranlage außer dem ersten Förderniveau und dem zweiten Förderniveau noch weitere Förderniveaus, insbesondere ein drittes Förderniveau, umfassen; auf diesem dritten Förderniveau sind in diesem Fall aber keine Prozessvorrichtungen der Lackieranlage, sondern lediglich Fördervorrichtungen der Lackieranlage angeordnet.

Die erfindungsgemäße Lösung ermöglicht den Aufbau einer "schlanken" Lackieranlage mit geringem apparativen Aufwand und geringem Platzbedarf.

Eine erfindungsgemäße Lackieranlage kann insbesondere die folgenden Vorteile aufweisen:
Durch die erfindungsgemäße Ausbildung einer Lackieranlage wird das für die Lackieranlage benötigte Gebäudevolumen auf das für den reinen Lackierprozess notwendige Maß reduziert.

Da nur eine Gebäudehülle ohne zusätzliche Geschossebenen benötigt wird, wird die Gebäudestruktur der Lackieranlage vereinfacht, wodurch Kostensenkungen erzielt werden.

Der Umfang der benötigten fördertechnischen Einrichtungen in der Lackieranlage wird wesentlich reduziert.

In der Lackieranlage entfallen gegenüber dem herkömmlichen Aufbau zusätzliche Förderebenen mit dem hierfür erforderlichen Stahlbau, Begehungen, Brandschutzeinrichtungen, Beleuchtungen und Belüftungen.

Durch den übersichtlichen Aufbau der Lackieranlage können die Anzahl und der Umfang von Personenschutzeinrichtungen erheblich reduziert werden.

Durch die erhebliche Reduzierung der Anzahl von Antriebsmotoren und der Sensortechnik für die Fördertechnik sowie aufgrund der wesentlich reduzierten Wege durch die Zentralisierung der fördertechnischen Einrichtungen in dem Zwischenlager werden die Instandhaltungsaufwendungen verringert.

Durch die erhebliche Reduzierung der Anzahl von Antriebsmotoren und der Sensortechnik für die Fördertechnik wird die Verfügbarkeit der Fördertechnik deutlich erhöht.

Durch die Vereinfachung der Gebäudestruktur und der Anlagentechnik wird eine deutliche Kostenreduzierung erzielt.

Durch die geringere Anzahl von Antriebsmotoren für die Fördertechnik wird der Energieverbrauch reduziert.

Eine weitere Reduktion des Energieverbrauchs ergibt sich durch einen verringerten Aufwand für die Beleuchtung und die Lüftung der Gebäudehülle.

Bei einer erfindungsgemäßen Lackieranlage können mehrere gleichartige Prozessvorrichtungen in zusammenhängenden Bereichen des ersten Förderniveaus zusammengefasst werden, in denen keine andersartigen Prozessvorrichtungen angeordnet sind.

Hierdurch wird eine strikte Aufteilung des Innenraums der Lackieranlage in verschiedene Funktionsbereiche erreicht. Die Bereiche für Arbeitsplätze, Maschinenbereiche und Prozessbereiche überlagern sich nicht mehr.

Die Schnittstellen zwischen der Gebäudetechnik und der Anlagentechnik sowie innerhalb der Anlagentechnik, welche den Stahlbau, die Energieversorgung, die Lüftungstechnik und den Brandschutz umfasst, werden wesentlich vereinfacht.

Da nur eine Gebäudehülle ohne weitere Funktionen gebaut werden muss, wird die Gebäudeerstellung für die Lackieranlage wesentlich vereinfacht, und die Abwicklungszeiträume für den Aufbau der Lackieranlage können verkürzt werden.

Die Montage der Anlagentechnik wird deutlich einfacher, wenn sämtliche Anlagen, insbesondere sämtliche Prozessvorrichtungen, von der 0,0 m-Ebene (Erdgeschossebene der Gebäudehülle) aus montiert werden können.

Auch die Inbetriebnahme der Anlagentechnik wird einfacher, da die einzelnen Prozessabschnitte der Lackieranlage wegen der Entkoppelung mittels des mindestens einen Zwischenlagers unabhängig von anderen Prozessabschnitten der Lackieranlage in Betrieb genommen werden können.

Das erfindungsgemäße Lackieranlagenkonzept eignet sich insbesondere für Lackieranlagen im Automobilbereich.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen Grundriss eines ersten Förderniveaus einer Lackieranlage zum Lackieren von Fahrzeugkarosserien;
- Fig. 2: einen schematischen Grundriss eines zweiten Förderniveaus der Lackieranlage zum Lackieren von Fahrzeugkarosserien;
- Fig. 3: einen schematischen Grundriss eines dritten Förderniveaus der Lackieranlage zum Lackieren von Fahrzeugkarosserien;
- Fig. 4: einen schematischen vertikalen Querschnitt durch die Lackieranlage, im Bereich eines Vorbehandlungs-Tauchbeckens, eines KTL-Tauchbeckens und offener Abdichtungs-Arbeitsplätze und im Bereich von Spritzkabinen für Füller, Grundlack und Klarlack, längs der Linien 4-4 in den Fig. 1 bis 3;
- Fig. 5: einen schematischen vertikalen Querschnitt durch die Lackieranlage, im Bereich eines Vorbehandlungs-Tauchbeckens, eines KTL-Tauchbeckens, zweier KTL-Trockner, zweier Unterbodenschutz-Beschichtungsanlagen, zweier Füller-Trockner, eines Decklack-Trockners, eines offenen Nacharbeits-Vorbereitungs-Arbeitsplatzes, zweier Decklack-Vorbereitungskabinen und eines weiteren Decklack-Trockners, längs der Linien 5-5 in den Fig. 1 bis 3;
- Fig. 6: einen schematischen vertikalen Querschnitt durch zwei Hochregallager der Lackieranlage, längs der Linien 6-6 in den Fig. 1 bis 3;
- Fig. 7: einen schematischen vertikalen Längsschnitt durch einen Bereich der Lackieranlage mit zwei Hochregallagern und einem Füller-Trockner mit Heizaggregaten und Kühlzone sowie einem Eingangstunnel zu einem Hochregallager, längs der Linien 7-7 in den Fig. 1 bis 3;
- Fig. 8: einen schematischen vertikalen Längsschnitt durch einen Bereich der Lackieranlage mit Spritzkabinen für Klarlack, einer Zuluftanlage für die Spritzkabinen und Lackkoagulierungsanlagen für Wasserlack und Lösemittellack, längs der Linien 8-8 in den Fig. 1 bis 3; und
- Fig. 9: eine schematische Darstellung der Lüftungstechnik für ein Hochregallager der Lackieranlage mit einem eine Eingangsschleuse umfassenden Eingangstunnel und einer Umluftanlage zur Erzeugung eines Überdrucks in einem Gehäuse des Hochregallagers.

Gleiche oder funktional äquivalente Elemente sind in allen Figuren mit denselben Bezugszeichen bezeichnet.

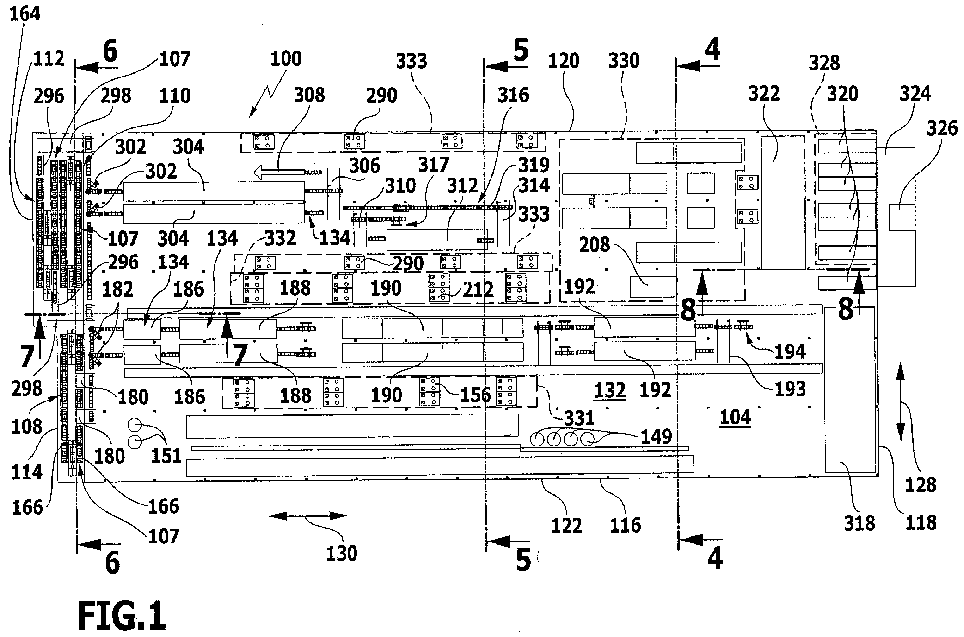

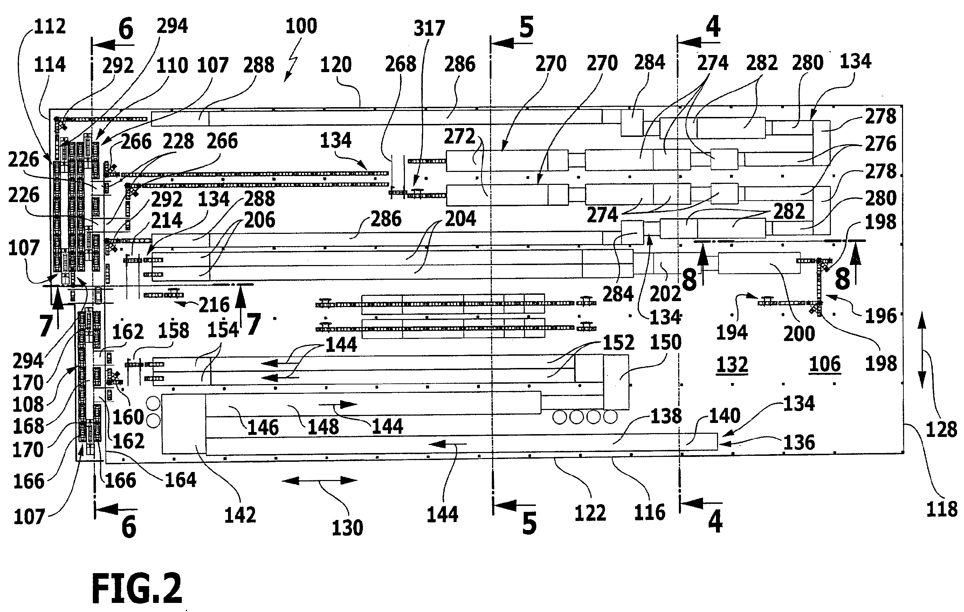

Eine in den Fig. 1 bis 9 dargestellte, als Ganzes mit 100 bezeichnete Lackieranlage zum Lackieren von Fahrzeugkarosserien 102 umfasst eine Vielzahl von Behandlungsbereichen zur Oberflächenbehandlung der Fahrzeugkarosserien 102, die auf einem in Fig. 1 dargestellten ersten Förderniveau 104 und auf einem in Fig. 2 dargestellten zweiten Förderniveau 106 angeordnet sind und durch welche die zu behandelnden Fahrzeugkarosserien 102 sukzessive hindurch gefördert werden.

Jeder Behandlungsbereich ist einem Prozessabschnitt der Lackieranlage 100 zugeordnet, welcher in einem von drei als Zwischenlager 107 dienenden Hochregallagern 108, 110 oder 112 der Lackieranlage 100 endet und/oder in einem dieser Hochregallager 108, 110 oder 112 beginnt.

Die drei Hochregallager 108, 110 und 112 sind an einer in den Fig. 1 bis 3 links dargestellten ersten Stirnseite 114 einer als Ganzes mit 116 bezeichneten Gebäudehülle der Lackieranlage 100 angeordnet.

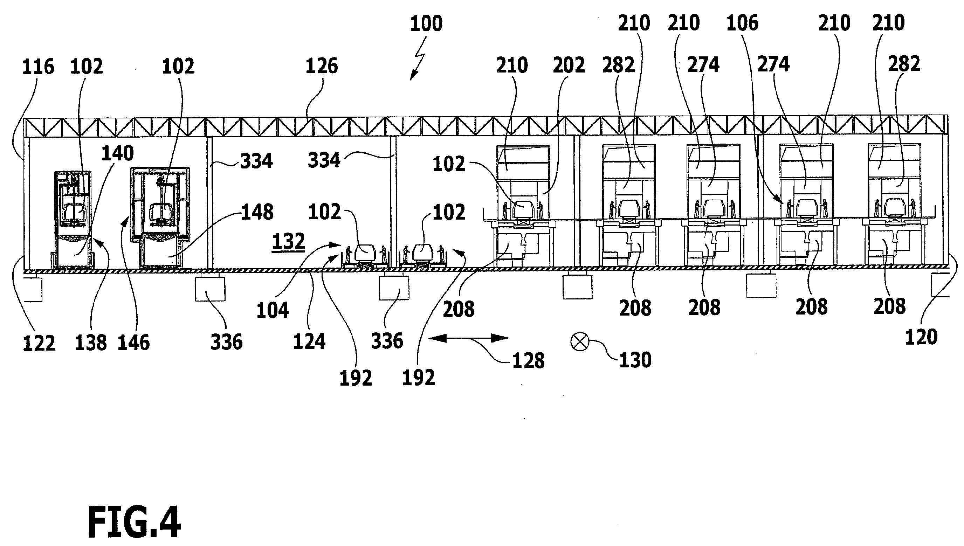

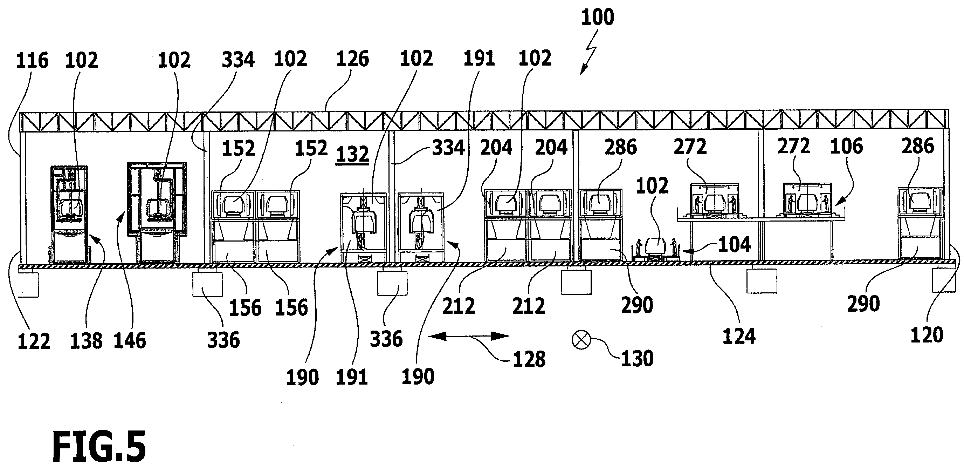

Die Gebäudehülle 116 der Lackieranlage 100 umfasst ferner eine der ersten Stirnseite 114 gegenüberliegende zweite Stirnseite 118 und zwei die beiden Stirnseiten 114 und 118 miteinander verbindende Längsseiten 120 und 122 sowie einen horizontalen Boden 124 und eine horizontale Deckenwand 126 (siehe die Fig. 4 und 5).

Die Stirnseiten 114 und 118 der Lackieranlage 100 verlaufen im Wesentlichen längs einer horizontalen Querrichtung 128 der Lackieranlage 100, während die - länger als die Stirnseiten 114 und 118 ausgebildeten - Längsseiten 120 und 122 im Wesentlichen längs einer senkrecht zu der Querrichtung 128 verlaufenden horizontalen Längsrichtung 130 der Lackieranlage verlaufen.

Die Stirnseiten 114, 118, die Längsseiten 120, 122, der Boden 124 und die Deckenwand 126 der Gebäudehülle 116 der Lackieranlage 100 umschließen gemeinsam einen Gebäudeinnenraum 132, in dem die Behandlungsbereiche und die Hochregallager 108, 110, 112 der Lackieranlage 100 angeordnet sind, durch welche die Fahrzeugkarosserien 102 nacheinander längs eines Förderweges 134 gefördert werden.

Der Förderweg 134 der Fahrzeugkarosserien 102 durch die Lackieranlage 100 beginnt an einem Eingang 136, welcher sich auf dem in Fig. 2 dargestellten zweiten Förderniveau 106 befindet. An dieser Stelle treten die Fahrzeugkarosserien 102 von einer der Lackieranlage 100 vorgeordneten Karosserierohbauanlage aus in die Lackieranlage 100 ein.

Von dem Eingang 136 aus erstreckt sich eine Vorhandlungsanlage 138 mit Vorbehandlungs-Tauchbecken 140 in der Längsrichtung 130 der Lackieranlage 100 in Richtung auf die erste Stirnseite 114 zu. An die Vorbehandlungslinie 138 schließt sich ein Wendebereich 142 an, in dem die Förderrichtung 144 der Fahrzeugkarosserien 102 um 180° gedreht wird. An den Wendebereich 142 schließt sich eine KTL-Anlage 146 ("KTL" steht für "Kataphoretische Tauchlackierung") mit mindestens einem KTL-Tauchbecken 148 an, welche sich in der Längsrichtung 130 der Lackieranlage 100 in Richtung auf die zweite Stirnseite 118 erstreckt.

Mehrere, beispielsweise vier, im Wesentlichen zylindrische Gegenbehälter 149 zu dem Vorbehandlungs-Tauchbecken 140 sind auf dem ersten Förderniveau 104 neben dem Vorbehandlungs-Tauchbecken 140 angeordnet.

Mehrere, beispielsweise zwei, Gegenbehälter 151 zu dem KTL-Tauchbecken 148 sind auf dem ersten Förderniveau 104 neben dem Wendebereich 142 angeordnet.

Auf die KTL-Anlage 146 folgt ein weiterer Wendebereich 150, in dem die Förderrichtung 144 der Fahrzeugkarosserien 102 erneut um 180° gedreht wird.

Im Anschluss an den Wendebereich 150 verzweigt der Förderweg 134 der Fahrzeugkarosserien 102 in zwei KTL-Durchlauftrockner 152, welche sich parallel zueinander in der Längsrichtung 130 in Richtung auf die erste Stirnseite 114 zu erstrecken und in jeweils einer Kühlzone 154 enden.

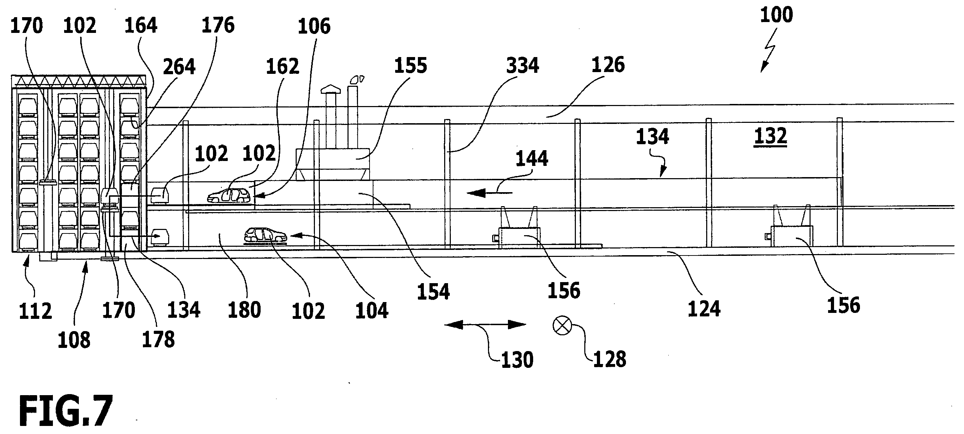

Über jeder Kühlzone 154 ist eine Zu-/Abluftanlage 155 für die betreffende Kühlzone 154 angeordnet (siehe Fig. 7).

Unter jedem der KTL-Durchlauftrockner 152 sind jeweils mehrere Heizaggregate 156 angeordnet, welche sich auf dem ersten Förderniveau 104 befinden und auf dem Boden 124 der Gebäudehülle 116 stehen (siehe Fig. 5).

Diese Heizaggregate 156 liefern erwärmte Zuluft, welche in die Trocknertunnel der KTL-Durchlauftrockner 152 eingespeist wird.

Wie aus Fig. 2 zu ersehen ist, folgt auf die Kühlzonen 154 der KTL-Durchlauftrockner 152 ein Querförderer 158, welcher abwechselnd Fahrzeugkarosserien 102 aus den beiden Kühlzonen 154 zu einem Schwenktisch 160 fördert, auf welchem die Fahrzeugkarosserien 102 um 90° um eine vertikale Achse geschwenkt werden, so dass sie anschließend nicht mehr parallel zur Längsrichtung 130, sondern parallel zur Querrichtung 128 der Lackieranlage 100 ausgerichtet sind.

Von dem Schwenktisch 160 gelangen die Fahrzeugkarosserien 102 durch einen von zwei Eingangstunneln 162 in das erste Hochregallager 108, welches durch ein luftdichtes Gehäuse 164 von dem Gebäudeinnenraum 132 abgetrennt ist.

Das Hochregallager 108 umfasst zwei sich parallel zur Querrichtung 128 der Lackieranlage 100 erstreckende Einlagerregale 166 für Fahrzeugkarosserien 102, welche durch einen Korridor 168 voneinander getrennt sind, in dem zwei Regalbediengeräte 170 längs der Querrichtung 128 verfahrbar angeordnet sind.

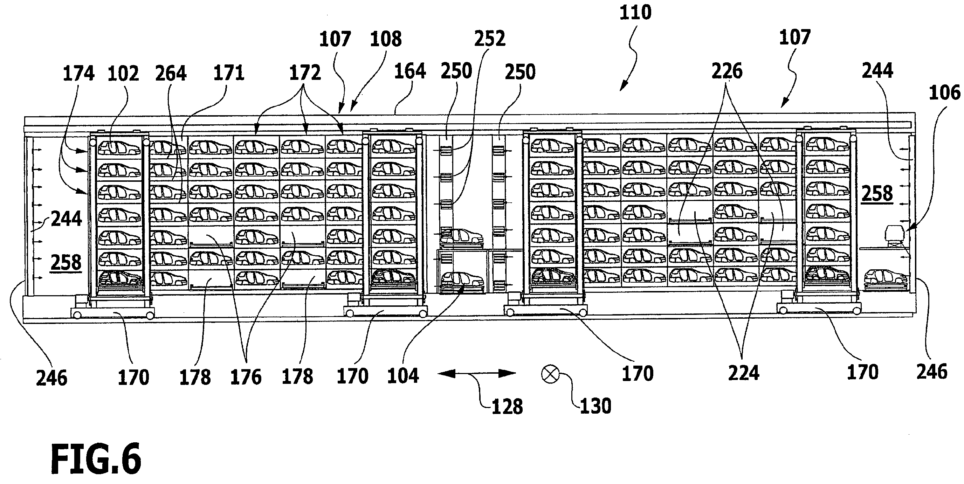

Jedes der Einlagerregale 166 weist eine Vielzahl von Karosserie-Lagerfächern 171 auf, die in mehreren vertikalen Säulen 172 übereinander und in mehreren horizontalen Reihen 174 nebeneinander angeordnet sind (siehe Fig. 6).

Zwei der Fächer auf dem zweiten Förderniveau 106 dienen als Einlagerpositionen 176 für das erste Hochregallager 108; auf diese Positionen werden die Fahrzeugkarosserien 102 durch die Eingangstunnel 162 zugefördert.

Jeweils eines der beiden Regalbediengeräte 170 übernimmt eine zugeförderte Fahrzeugkarosserie 102 von einer dieser Einlagerpositionen 176 und transportiert die Fahrzeugkarosserie 102 zur Zwischenlagerung in ein freies Karosserie-Lagerfach 171.

Wenn die betreffende Fahrzeugkarosserie 102 weiterbehandelt werden soll, wird sie aus ihrem Karosserie-Lagerfach 171 entnommen und von einem Regalbediengerät 170 zu einer von zwei Auslagerpositionen 178 transportiert, welche auf der Höhe des ersten Förderniveaus 104 der Lackieranlage 100 angeordnet sind.

Es ist auch möglich, eine Fahrzeugkarosserie 102 mittels eines Regalbediengeräts 170 direkt von einer Einlagerposition 176 zu einer Auslagerposition 178 des ersten Hochregallagers 108 zu transportieren.

Von diesen Auslagerpositionen 178 aus werden die Fahrzeugkarosserien 102 auf dem ersten Förderniveau 104 durch Ausgangstunnel 180 (siehe Fig. 1) aus dem ersten Hochregallager 108 heraus zu Schwenktischen 182 gefördert, auf welchen die Ausrichtung der Fahrzeugkarosserien 102 um 90° um eine vertikale Achse gedreht wird, so dass die Fahrzeugkarosserien 102 wieder parallel zur Längsrichtung 130 der Lackieranlage 100 ausgerichtet sind.

Die Vorbehandlungsanlage 138, die KTL-Anlage 146 und die KTL-Durchlauftrockner 152 mit den Kühlzonen 154 bilden zusammen einen ersten Prozessabschnitt 184 der Lackieranlage 100, welcher am Eingang 136 der Lackieranlage 100 auf dem zweiten Förderniveau 106 beginnt und an den Eingangstunneln 162 des ersten Hochregallagers 108 auf dem zweiten Förderniveau 106 endet.

Die Behandlungsbereiche des ersten Prozessabschnittes 184 befinden sich alle auf dem zweiten Förderniveau 106.

Von den Schwenktischen 182 auf dem ersten Förderniveau 104 erstreckt sich der Förderweg 134 der Fahrzeugkarosserien 102 in zwei parallelen Linien in der Längsrichtung 130 der Lackieranlage 100 in Richtung auf die zweite Stirnseite 118 zu durch eine Reihe offener Behandlungsbereiche oder Arbeitsplätze hindurch, nämlich durch jeweils einen KTL-Kontroll-Bereich 186, durch jeweils einen Nahtabdicht-Bereich 188, durch jeweils eine Unterbodenschutz-Beschichtungsanlage 190 und durch jeweils einen Feinabdichtbereich 192 bis zu einem Querförderer 193 und einer Hebeanlage 194.

Die Unterbodenschutz-Beschichtungsanlagen 190 umfassen sowohl Unterbodenschutz-Applikationskabinen 191 (siehe Fig. 5) als auch zum Gebäudeinnenraum 132 hin offene Behandlungsbereiche und Arbeitsplätze.

Die Hebeanlage 194 fördert die Fahrzeugkarosserien 102 von dem in Fig. 1 dargestellten ersten Förderniveau 104 auf das in Fig. 2 dargestellte zweite Förderniveau 106. Auf dem zweiten Förderniveau 106 schließt sich an die Hebeanlage 194 ein Wendebereich 196 mit zwei Schwenktischen 198 an, in denen die Ausrichtung der Fahrzeugkarosserien 102 jeweils um 90° um eine vertikale Achse gedreht wird, so dass die Fahrzeugkarosserien 102 im Wendebereich 196 um insgesamt 180° gedreht werden.

An den Wendebereich 196 schließen sich eine Reinigungskabine 200 und eine Füller-Spritzkabine 202 an, in welcher die Fahrzeugkarosserien 102 mittels Spritzrobotern mit einer Beschichtung aus einem Füllermaterial versehen werden.

Nach der Füller-Spritzkabine 202 verzweigt der Förderweg 134 der Fahrzeugkarosserien 102 in zwei sich parallel zur Längsrichtung 130 der Lackieranlage 100 auf die erste Stirnseite 114 zu erstreckende Füller-Durchlauftrockner 204, welche in jeweils einer Kühlzone 206 enden.

Wie am besten aus Fig. 4 zu ersehen ist, ist unter der Füller-Spritzkabine 202 eine Farbnebel-Auswaschanlage 208 angeordnet, welche sich auf dem ersten Förderniveau 104 befindet und auf dem Boden 124 der Gebäudehülle 116 steht.

Wie aus Fig. 4 ferner zu ersehen ist, ist über der Füller-Spritzkabine 202 ein Zuluft-Plenum 210 angeordnet.

Durch das Zuluft-Plenum 210 wird der darunter liegenden Füller-Spritzkabine 202 ein Zuluftstrom zugeführt, welcher in der Füller-Spritzkabine 202 Lack-Overspray aufnimmt, der in der unter der Füller-Spritzkabine 202 liegenden Farbnebel-Auswaschanlage 208 aus dem Luftstrom ausgewaschen wird.

Wie am besten aus Fig. 5 zu ersehen ist, sind unter den Füller-Durchlauftrocknern 204 Heizaggregate 212 zum Erzeugen der den Füller-Durchlauftrocknern 204 zuzuführenden Warmluft vorgesehen.

Die Heizaggregate 212 befinden sich auf dem ersten Förderniveau 104 der Lackieranlage 100 und stehen auf dem Boden 124 der Gebäudehülle 116.

An die Kühlzonen 206 der Füller-Durchlauftrockner 204 schließt sich im Förderweg 134 der Fahrzeugkarosserien 102 ein Querförderer 214 an, mittels welchem die Fahrzeugkarosserien 102 nach dem Durchlaufen der Kühlzonen 206 zu einer Hebeanlage 216 förderbar sind.

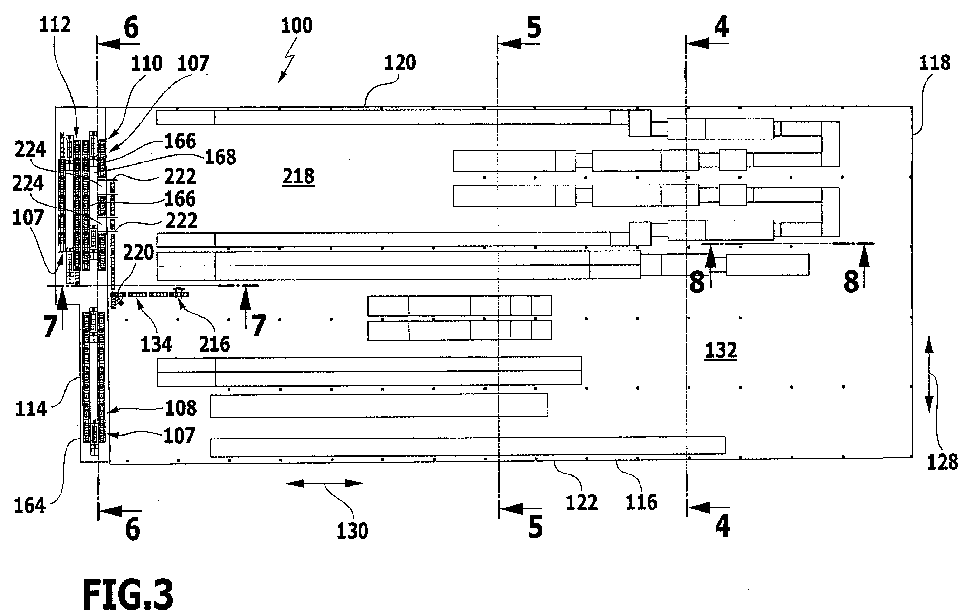

Die Hebeanlage 216 fördert die Fahrzeugkarosserien 102 von dem zweiten Förderniveau 106 auf ein in Fig. 3 dargestelltes drittes Förderniveau 218 der Lackieranlage 100.

Das dritte Förderniveau 218 liegt über dem zweiten Förderniveau 106, welches seinerseits über dem ersten Förderniveau 104 liegt.

Beispielsweise liegt das dritte Förderniveau 218 auf einer Höhe von ungefähr 7,5 m über dem Boden 124, während das zweite Förderniveau 106 auf einer Höhe von ungefähr 5,0 m über dem Boden 124 und das erste Förderniveau 104 auf der Höhe des Bodens 124 liegt.

Von der Hebeanlage 216 werden die Fahrzeugkarosserien 102 zu einem Schwenktisch 220 gefördert, welcher die Fahrzeugkarosserien 102 um einen Winkel von 90° um eine vertikale Schwenkachse dreht, so dass die Fahrzeugkarosserien 102 anschließend parallel zur Querrichtung 128 der Lackieranlage 100 ausgerichtet sind.

In dieser Ausrichtung werden die Fahrzeugkarosserien 102 zu jeweils einem von zwei Eingangstunneln 222 des zweiten Hochregallagers 110 gefördert.

Durch die Eingangstunnel 222 gelangen die Fahrzeugkarosserien 102 zu zwei Einlagerpositionen 224 des zweiten Hochregallagers 110 (siehe Fig. 6), welche sich auf der Höhe des dritten Förderniveaus 218 befinden.

Von diesen Einlagerpositionen 224 aus werden die Fahrzeugkarosserien 102 mittels zweier Regalbediengeräte 170 des zweiten Hochregallagers 110 in jeweils ein freies Karosserie-Lagerfach 171 transportiert und dort abgesetzt.

Zur Weiterbehandlung einer Fahrzeugkarosserie 102 wird dieselbe aus ihrem Karosserie-Lagerfach 171 mittels eines der Regalbediengeräte 170 zu einer von zwei Auslagerpositionen 226 des zweiten Hochregallagers 110 transportiert, welche sich auf der Höhe des zweiten Förderniveaus 106 der Lackieranlage 100 befinden.

Von diesen Auslagerpositionen 226 werden die Fahrzeugkarosserien 102 durch jeweils einen von zwei Ausgangstunneln 228 aus dem zweiten Hochregallager 110 heraus gefördert (siehe Fig. 2).

Die KTL-Kontroll-Bereiche 186, die Nahtabdichtbereiche 188, die Unterbodenschutz-Beschichtungsanlagen 190, die Feinabdichtbereiche 192, die Reinigungskabine 200, die Füller-Spritzkabine 202 und die Füller-Durchlauftrockner 204 mit ihren Kühlzonen 206 gehören zu einem zweiten Prozessabschnitt 230 der Lackieranlage 100, welcher an dem ersten Hochregallager 108 auf dem ersten Förderniveau 104 beginnt und an dem zweiten Hochregallager 110 auf dem dritten Förderniveau 218 endet.

Dabei befinden sich die KTL-Kontroll-Bereiche 186, die Nahtabdichtbereiche 188, die Unterbodenschutz-Beschichtungsanlagen 190 und die Feinabdichtbereiche 192 auf dem ersten Förderniveau 104, während sich die Reinigungskabine 200, die Füller-Spritzkabine 202 und die Füller-Durchlauftrockner 204 mit ihren Kühlzonen 206 auf dem zweiten Förderniveau 106 befinden.

Alle Behandlungsbereiche des zweiten Prozessabschnitts 230 befinden sich somit auf dem ersten Förderniveau 104 oder auf dem zweiten Förderniveau 106 der Lackieranlage 100.

Das zweite Hochregallager 110 ist ebenso wie das erste Hochregallager 108 und das später noch zu beschreibende dritte Hochregallager 112 als ein Reinraumbereich ausgebildet.

Insbesondere ist jedes der Hochregallager von einem luftdichten Gehäuse 164 eingeschlossen, welches den Innenraum des Hochregallagers von dem Gebäudeinnenraum 132 der Gebäudehülle 116 abtrennt, so dass keine Verunreinigungen aus dem Gebäudeinnenraum 132 in den Innenraum des Gehäuses 164 des jeweiligen Hochregallagers gelangen können.

Der Innenraum der Gehäuse 164 der Hochregallager ist nur über die jeweiligen Eingangstunnel 162, 222 und über die jeweiligen Ausgangstunnel 180, 228 zugänglich.

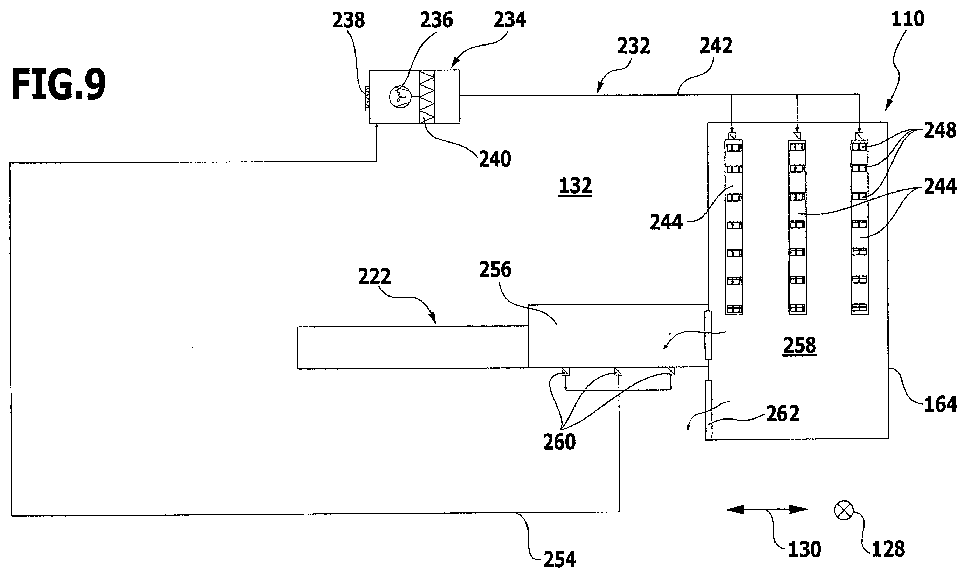

Um zu vermeiden, dass durch diese Tunnel Verunreinigungen in den Innenraum des Gehäuses 164 gelangen, wird der Innenraum jedes Hochregallagers mittels einer in Fig. 9 schematisch dargestellten Umluftanlage 232 unter einen Überdruck von mindestens ungefähr 100 Pa, vorzugsweise von mindestens ungefähr 50 Pa, relativ zu dem Luftdruck im Gebäudeinnenraum 132 gesetzt.

Wie aus Fig. 9 zu ersehen ist, umfasst die Umluftanlage 232 ein Zuluftgerät 234 mit einem Gebläse 236, welches Luft aus dem Gebäudeinnenraum 132 durch eine Ansaugöffnung 238 ansaugt und durch ein Luftfilter 240 in eine Luftzuführleitung 242 fördert.

Die Luftzuführleitung 242 verzweigt in mehrere, beispielsweise drei, Zuluftkanäle 244, welche sich in vertikaler Richtung längs einer Stirnwand 246 eines Hochregallagers erstrecken (siehe Fig. 6).

Aus diesen Zuluftkanälen 244 tritt die Zuluft durch in vertikaler Richtung übereinander angeordnete Zuluftöffnungen 248 der Zuluftkanäle 244 in den Innenraum 258 des Hochregallagers aus.

Nahe der entgegengesetzten Stirnseite des Hochregallagers sind ein oder mehrere Abluftkanäle 250 vorgesehen, welche sich ebenfalls in vertikaler Richtung längs einer Begrenzungswand des Gehäuses 164 des jeweiligen Hochregallagers erstrecken und senkrecht übereinander angeordnete Abluftöffnungen 252 aufweisen, durch welche Luft aus dem Innenraum 258 des Gehäuses 164 des Hochregallagers in eine in Fig. 9 dargestellte Abluftleitung 254 abgesaugt wird.

Die Verbindung zwischen den Abluftkanälen 250 und der Abluftleitung 254 ist in den Fig. 6 und 9 nicht dargestellt.

Die beiden Hochregallager 110 können, wie in Fig. 6 dargestellt, in einem gemeinsamen Gehäuse 164 angeordnet sein, so dass Luft ungehindert von dem ersten Hochregallager 108 zu dem zweiten Hochregallager 110 oder in umgekehrter Richtung gelangen kann.

Alternativ hierzu kann auch vorgesehen sein, dass jedes der Hochregallager 108, 110 ein eigenes Gehäuse 164 aufweist, welches luftdicht von dem Gehäuse des jeweils anderen Hochregallagers getrennt ist.

Wie aus Fig. 9 zu ersehen ist, umfasst ferner jeder Eingangstunnel eines Hochregallagers, beispielsweise der Eingangstunnel 222 des zweiten Hochregallagers 110, eine Eingangsschleuse 256, in welche Zuluft aus dem unter Überdruck stehenden Innenraum 258 des Gehäuses 164 des Hochregallagers, beispielsweise des zweiten Hochregallagers 110, einströmt.

Diese einströmende Zuluft verhindert, dass Luft aus dem Gebäudeinnenraum 132 durch den Eingangstunnel 222 in den Innenraum 258 des Gehäuses 164 gelangt.

Aus der Eingangsschleuse 256 wird die Schleusenluft über Luftklappen 260 in die Abluftleitung 254 abgesaugt.

Die Abluftleitung 254 mündet auf der Saugseite des Gebläses 236 in das Zuluftgerät 234 der Umluftanlage 232, so dass der Umluftkreislauf von dem Zuluftgerät 234 durch den Innenraum 258 des Gehäuses 164 des Hochregallagers und gegebenenfalls durch die Eingangsschleuse 256 des Hochregallagers geschlossen ist.

Die Eingangstunnel der übrigen Hochregallager sind ebenso wie die Eingangstunnel 222 des zweiten Hochregallagers 110 mit einer umluftdurchströmten Eingangsschleuse 256 versehen.

Ebenso sind die Ausgangstunnel sämtlicher Hochregallager ebenfalls mit einer entsprechend ausgebildeten Ausgangsschleuse versehen.

Um den Überdruck im Innenraum 258 des Gehäuses 164 des Hochregallagers auf dem gewünschten Niveau zu halten, wird ein Teil der dem Gehäuse 164 zugeführten Zuluft über Austrittsöffnungen 262 (siehe Fig. 9) des Gehäuses 164 direkt in den Gebäudeinnenraum 132 ausgelassen.

Die hierdurch dem Umluftkreislauf verlorengehende Luft wird durch Ansaugung über die Ansaugöffnung 238 des Zuluftgeräts 234 ersetzt.

Um zu verhindern, dass Schmutz von oben auf die in den Karosserie-Lagerfächern 171 gelagerten Fahrzeugkarosserien 102 herabfallen kann, ist jedes Karosserie-Lagerfach 171 mit einer über dem jeweiligen Lagerplatz für eine Fahrzeugkarosserie 102 angeordneten Abdeckung 264 versehen (siehe Fig. 6).

Diese Abdeckung 264 kann insbesondere als eine Schutzfolie aus einem geeigneten Kunststoffmaterial, beispielsweise aus Polyethylen, ausgebildet sein.

Die als Abdeckung 264 eingesetzte Schutzfolie entspricht den jeweils geltenden Brandschutzbestimmungen.

Durch die Abdeckung 264 wird insbesondere verhindert, dass bei einem Einlagerungs- oder Auslagerungsvorgang einer Fahrzeugkarosserie 102 in einem über einem Karosserie-Lagerfach 171 angeordneten weiteren Karosserie-Lagerfach 171 Verunreinigungen von dem Regalbediengerät 170 oder von einem Fahrzeugkarosserie-Transportskid, auf dem eine Fahrzeugkarosserie 102 angeordnet ist, auf eine in dem unteren Karosserie-Lagerfach 171 gelagerte Fahrzeugkarosserie 102 herabfallen können.

Von den Ausgangstunneln 228 des zweiten Hochregallagers 110 werden die Fahrzeugkarosserien 102 auf dem zweiten Förderniveau 106 zu jeweils einem Schwenktisch 266 gefördert, welcher die Fahrzeugkarosserien 102 um einen Winkel von 90° um eine vertikale Schwenkachse schwenkt, so dass die Fahrzeugkarosserien 102 anschließend parallel zur Längsrichtung 130 der Lackieranlage 100 ausgerichtet sind.

In dieser Ausrichtung werden die Fahrzeugkarosserien 102 auf dem zweiten Förderniveau 106 der Lackieranlage 100 zu einem Querförderer 268 gefördert, welcher die Fahrzeugkarosserien 102 auf zwei Decklacklinien 270 verteilt.

In jeder dieser Decklacklinien 270 folgen im Förderweg 134 der Fahrzeugkarosserien 102 jeweils eine Decklack-Vorbereitungskabine 272, mehrere Grundlack-Spritzkabinen 274 und ein Zwischen-Durchlauftrockner 276 aufeinander, welche sich alle in der Längsrichtung 130 der Lackieranlage 100 auf die zweite Stirnseite 118 zu erstrecken.

Wie am besten aus Fig. 4 zu ersehen ist, ist dabei unter jeder Grundlack-Spritzkabine 274 eine Farbnebel-Auswaschanlage 208 angeordnet, welche sich auf dem ersten Förderniveau 104 befindet und auf dem Boden 124 der Gebäudehülle 116 steht.

Ferner ist über jeder Grundlack-Spritzkabine 274 jeweils ein Zuluft-Plenum 210 angeordnet.

An den Zwischen-Durchlauftrockner 276 jeder Decklacklinie 270 schließt sich jeweils ein Wendebereich 278 in Form einer Luftschleuse an, in welchem die Ausrichtung der Fahrzeugkarosserien 102 um einen Winkel von 180° gedreht wird.

An den Wendebereich 278 jeder Decklacklinie 270 schließen sich im Förderweg 134 der Fahrzeugkarosserien 102 jeweils eine Kühlzone 280, mehrere Klarlack-Spritzkabinen 282, eine Abdunstzone 284, ein Decklack-Durchlauftrockner 286 und eine Kühlzone 288 an, welche sich jeweils in der Längsrichtung 130 der Lackieranlage 100 auf die erste Stirnseite 114 der Gebäudehülle 116 zu erstrecken.

Wie am besten aus Fig. 4 zu ersehen ist, sind dabei unter den Klarlack-Spritzkabinen 282 jeweils Farbnebel-Auswaschanlagen 208 angeordnet, die sich auf dem ersten Förderniveau 104 der Lackieranlage 100 befinden und auf dem Boden 124 der Gebäudehülle 116 stehen.

Über den Klarlack-Spritzkabinen 282 ist jeweils ein Zuluft-Plenum 210 angeordnet.

Wie insbesondere aus Fig. 5 zu ersehen ist, sind unter den Decklack-Durchlauftrocknern 286 jeweils mehrere Heizaggregate 290 angeordnet, die sich auf dem ersten Förderniveau 104 der Lackieranlage 100 befinden und auf dem Boden 124 der Gebäudehülle 116 stehen.

Von den Kühlzonen 288 werden die Fahrzeugkarosserien 102 zu jeweils einem Schwenktisch 292 gefördert, der die Fahrzeugkarosserien 102 um einen Winkel von 90° um eine vertikale Achse schwenkt, so dass die Fahrzeugkarosserien 102 anschließend parallel zur Querrichtung 128 der Lackieranlage 100 ausgerichtet sind.

In dieser Ausrichtung werden die Fahrzeugkarosserien 102 durch jeweils einen von zwei Eingangstunneln 294, welche mit jeweils einer Eingangsschleuse versehen sind, auf dem zweiten Förderniveau 106 in das dritte Hochregallager 112 der Lackieranlage 100 gefördert.

Von Einlagerpositionen des dritten Hochregallagers 112, die sich auf der Höhe des zweiten Förderniveaus 106 befinden, werden die Fahrzeugkarosserien 102 mittels Regalbediengeräten 170 zu Karosserie-Lagerfächern 171 des dritten Hochregallagers 112 transportiert.

Aus den Karosserie-Lagerfächern 171 werden die Fahrzeugkarosserien 102 für die Weiterbehandlung mittels der Regalbediengeräte 170 zu Auslagerpositionen des dritten Hochregallagers 112 auf der Höhe des ersten Förderniveaus 104 der Lackieranlage 100 transportiert.

Das dritte Hochregallager 112 ist in der Längsrichtung 130 der Lackieranlage 100 gesehen hinter dem zweiten Hochregallager 110 an der ersten Stirnseite 114 der Gebäudehülle 116 und somit zwischen der ersten Stirnseite 114 und dem zweiten Hochregallager 110 angeordnet.

Von den Auslagerpositionen des dritten Hochregallagers 112 gelangen die Fahrzeugkarosserien 102 durch Ausgangstunnel 296 des dritten Hochregallagers 112, welche jeweils eine Ausgangsschleuse umfassen, auf dem ersten Förderniveau 104 der Lackieranlage 100 (siehe Fig. 1) zu jeweils einem Querförderer 298.

Die Decklack-Linien 270 mit den Decklack-Vorbereitungskabinen 272, den Grundlack-Spritzkabinen 274, den Zwischen-Durchlauftrocknern 276, den Kühlzonen 280, den Klarlack-Spritzkabinen 282, den Abdunstzonen 284 und den Decklack-Durchlauftrocknern 286 mit den Kühlzonen 288 gehören zu einem dritten Prozessabschnitt 300 der Lackieranlage 100, welcher an den Ausgangstunneln 228 des zweiten Hochregallagers 110 auf dem zweiten Förderniveau 106 der Lackieranlage 100 beginnt und an den Eingangstunneln 294 des dritten Hochregallagers 112 auf dem zweiten Förderniveau 106 der Lackieranlage 100 endet.

Sämtliche Behandlungsbereiche des dritten Prozessabschnitts 300, d.h. die Decklack-Linien 270 mit den Decklack-Vorbereitungskabinen 272, den Grundlack-Spritzkabinen 274, den Zwischen-Durchlauftrocknern 276, den Kühlzonen 280, den Klarlack-Spritzkabinen 282, den Abdunstzonen 284 und den Decklack-Durchlauftrocknern 286 mit den Kühlzonen 288, befinden sich auf dem zweiten Förderniveau 106 der Lackieranlage 100.

Das dritte Hochregallager 112 ist in der vorstehend bereits im Zusammenhang mit dem zweiten Hochregallager 110 beschriebenen Weise als ein Reinraumbereich ausgebildet, der von dem Gebäudeinnenraum 132 der Gebäudehülle 116 abgetrennt ist.

Von den Querförderern 298 auf dem ersten Förderniveau 104 der Lackieranlage 100 gelangen die Fahrzeugkarosserien 102 zu Schwenktischen 302, welche die Fahrzeugkarosserien 102 um einen Winkel von 90° um eine vertikale Achse schwenken, so dass die Fahrzeugkarosserien 102 anschließend wieder parallel zur Längsrichtung 130 der Lackieranlage 100 ausgerichtet sind.

In dieser Ausrichtung werden die Fahrzeugkarosserien 102 auf dem ersten Förderniveau 104 der Lackieranlage 100 durch jeweils einen von zwei Fertigstellungs-und-Inspektions-Bereichen 304 gefördert.

An die Fertigstellungs-und-Inspektions-Bereiche 304 schließt sich im Förderweg 134 der Fahrzeugkarosserien 102 ein Querförderer 306 an, welcher die Fahrzeugkarosserien 102 zu einem Ausgang 308 der Lackieranlage 100 fördert, von wo die fertig lackierten Fahrzeugkarosserien 102 zu einer Endmontageanlage gelangen.

Wenn eine Nacharbeit an einer Fahrzeugkarosserie 102 erforderlich ist, wird dieselbe von dem Querförderer 306 zu einem Nacharbeits-Zuförderer 319 gefördert, von wo die betreffende Fahrzeugkarosserie 102 über einen Querförderer 314 in einen Nacharbeits-Vorbereitungs-Bereich 312 gelangt.

Nach abgeschlossener Nacharbeits-Vorbereitung wird die Fahrzeugkarosserie 102 über einen Querförderer 310 und eine sich daran anschließende Hebeanlage 317 zu dem Einlauf einer der Decklack-Vorbereitungskabinen 272 auf dem zweiten Förderniveau 106 gefördert, um anschließend nochmals lackiert zu werden.

Die Fertigstellungs-und-Inspektionsbereiche 304 sowie der Nacharbeits-Vorbereitungsbereich 312 gehören zu einem vierten Prozessabschnitt 316 der Lackieranlage 100, welcher an den Ausgangstunneln 296 des dritten Hochregallagers 112 auf dem ersten Förderniveau 104 beginnt und an dem Ausgang 308 der Lackieranlage 100 auf dem ersten Förderniveau 104 der Lackieranlage 100 endet.

Sämtliche Behandlungsbereiche des vierten Prozessabschnitts 316, d.h. die Fertigstellungs-und-Inspektions-Bereiche 304 und der Nacharbeits-Vorbereitungsbereich 312, befinden sich auf dem ersten Förderniveau 104 der Lackieranlage 100.

Wie am besten aus Fig. 1 zu ersehen ist, befindet sich auf dem ersten Förderniveau 104 der Lackieranlage 100 ferner ein Farbmischraum 318, welcher zwischen den Feinabdichtbereichen 192 des zweiten Prozessabschnitts 230 und der zweiten Stirnseite 118 der Gebäudehülle 116 angeordnet ist.

Ferner befinden sich auf dem ersten Förderniveau 104 mehrere Zuluftanlagen 320, welche der Versorgung der Zuluft-Plenen 210 der Füller-Spritzkabinen 202, der Grundlack-Spritzkabinen 274 bzw. der Klarlack-Spritzkabinen 282 dienen und zwischen den Farbnebel-Auswaschanlagen 208 dieser Spritzkabinen einerseits und der zweiten Stirnseite 118 der Gebäudehülle 116 andererseits angeordnet sind.

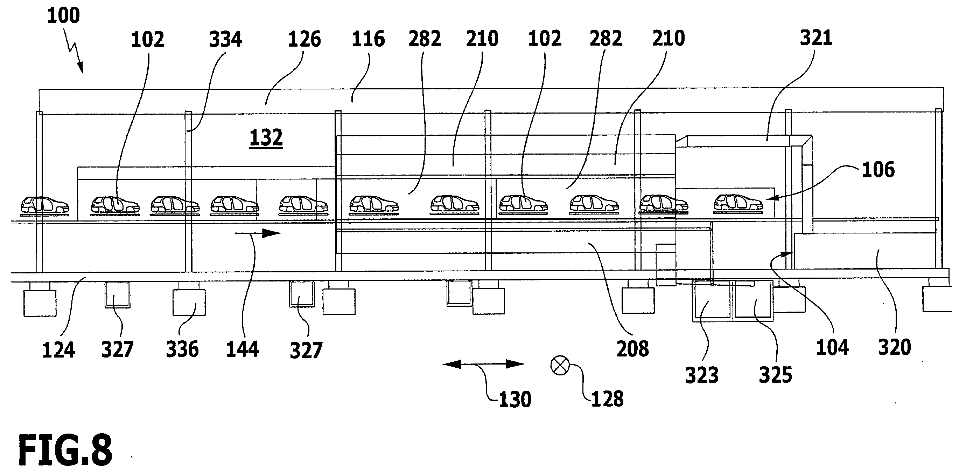

Die Zuluftanlagen 320 sind über Zuluftkanäle 321 (siehe Fig. 8) mit den jeweils zugeordneten Zuluft-Plenen 210 der Spritzkabinen verbunden.

In demselben Bereich ist ferner auf dem ersten Förderniveau 104 der Lackieranlage 100 ein Lackschlamm-Entsorgungsbereich 322 vorgesehen, welcher der Weiterbearbeitung des von den Farbnebel-Auswaschanlagen 208 aus der Kabinenabluft ausgewaschenen Lack-Oversprays dient und zwischen den Zuluftanlagen 320 einerseits und den Farbnebel-Auswaschanlagen 208 andererseits angeordnet ist.

Der Lackschlamm-Entsorgungsbereich 322 kann unter dem Boden 124 der Gebäudehülle 116 angeordnete Lackkoagulierungsanlagen 323 für Wasserlack und/oder Lackkoagulierungsanlagen 325 für Lösemittellack umfassen.

Benachbart zu den Zuluftanlagen 320 ist außerhalb der Gebäudehülle 116 an der zweiten Stirnseite 118 der Gebäudehülle 116 eine Abluftanlage 324 angeordnet, welche Abluft über unter dem Boden 124 der Gebäudehülle 116 angeordnete Abluftkanäle 327 aus den Spritzkabinen absaugt und zu einem Abluftkamin 326 abführt.

Die Zuluftanlagen 320 liegen alle innerhalb eines im Wesentlichen rechteckigen, zusammenhängenden Bereichs 328 des ersten Förderniveaus 104, in dem keine anderen Prozessvorrichtungen der Lackieranlage 100 angeordnet sind.

Ebenso liegen die Farbnebel-Auswaschanlagen 208 in einem mit 330 bezeichneten, im Wesentlichen rechteckigen, zusammenhängenden Bereich des ersten Förderniveaus 104, in dem keine anderen Prozessvorrichtungen der Lackieranlage 100 angeordnet sind.

Die Heizaggregate 156 der KTL-Durchlauftrockner 152 liegen alle in einem im Wesentlichen rechteckigen, zusammenhängenden Bereich 331 des ersten Förderniveaus 104 der Lackieranlage 100, in dem keine anderen Prozessvorrichtungen der Lackieranlage 100 angeordnet sind.

Die Heizaggregate 212 der Füller-Durchlauftrockner 204 liegen ebenfalls alle in einem im Wesentlichen rechteckigen, zusammenhängenden Bereich 332 des ersten Förderniveaus 104 der Lackieranlage 100, in dem keine anderen Prozessvorrichtungen der Lackieranlage 100 angeordnet sind.

Auch die Heizaggregate 290 der Decklack-Durchlauftrockner 286 liegen jeweils in einem im Wesentlichen rechteckigen, zusammenhängenden Bereich 333 des ersten Förderniveaus 104 der Lackieranlage 100, in welchem keine anderen Prozessvorrichtungen der Lackieranlage 100 angeordnet sind.

Durch die klare Gliederung des ersten Förderniveaus 104 der Lackieranlage und die Zusammenfassung von gleichartigen Prozessvorrichtungen in den jeweiligen zusammenhängenden Bereichen 328, 330, 331, 332 und 333 des ersten Förderniveaus 104 wird erreicht, dass sich Bereiche für offene Arbeitsplätze, Maschinenbereiche und Prozessbereiche nicht gegenseitig überlagern und dass insbesondere die Abstrahlung von Wärme von den Heizaggregaten 156, 212 und 290 der Durchlauftrockner die anderen Prozessvorrichtungen und Arbeitsplätze nicht nachteilig beeinflusst.

Wie am besten aus den Fig. 4 und 5 zu ersehen ist, ist die Deckenwand 126 der Gebäudehülle 116 durch vertikale Stützen 334 abgestützt, welche sich von dem Boden 124 der Gebäudehülle 116 bis zu der Deckenwand 126 erstrecken.

Unterhalb des Bodens 124 ist im Bereich jeder Stütze 334 jeweils ein Betonfundament 336 vorgesehen.

Die vorstehend beschriebene Lackieranlage 100 funktioniert wie folgt:
In einem Rohbaubereich montierte Fahrzeugkarosserien 102 werden am Eingang 136 der Lackieranlage 100 in den ersten Prozessabschnitt 184 der Lackieranlage 100 gefördert und in diesem ersten Prozessabschnitt 184 vorbehandelt und mit einer kataphoretischen Tauchlackierung versehen. Ferner wird in dem ersten Prozessabschnitt 184 die aufgebrachte Tauchlackierung getrocknet.

Durch das Vorbehandlungs-Tauchbecken 140 und das KTL-Tauchbecken 148 werden die Fahrzeugkarosserien 102 dabei an einem Hängeförderer hängend hindurchgefördert, wobei die Fahrzeugkarosserien 102 durch eine Absenkung der Hängefördererbahn von dem zweiten Förderniveau 106 aus in die genannten Tauchbecken eingetaucht werden.

Alternativ hierzu könnten die Fahrzeugkarosserien 102 durch den ersten Prozessabschnitt 184 auch an Drehhalterungen gefördert werden, wobei die Fahrzeugkarosserien 102 durch eine Drehung um eine horizontale Achse von dem zweiten Förderniveau 106 aus in die Tauchbecken 140 und 148 des ersten Prozessabschnitts 184 eingetaucht und durch eine weitere Drehung um diese Achse aus diesem Becken wieder ausgetaucht werden können.

Von dem ersten Prozessabschnitt 184 gelangen die Fahrzeugkarosserien 102 in das erste Hochregallager 108, in welches die Fahrzeugkarosserien 102 auf dem zweiten Förderniveau 106 hinein gefördert werden und aus welchem die Fahrzeugkarosserien 102 auf dem ersten Förderniveau 104 wieder heraus gefördert werden.

Vor dem Verlassen des ersten Hochregallagers 108 können die Fahrzeugkarosserien 102 in einem Karosserie-Lagerfach 171 zwischengelagert werden.

Die Fahrzeugkarosserien 102 können aus dem ersten Hochregallager 108 in einer von der Einlagerungsreihenfolge verschiedenen Auslagerungsreihenfolge ausgelagert werden, so dass die Behandlungsreihenfolge der Fahrzeugkarosserien 102 zwischen dem ersten Prozessabschnitt 184 und dem zweiten Prozessabschnitt 230 geändert werden kann.

Auf diese Weise können für die nachfolgende Lackierung Farbblöcke gebildet und/oder Nacharbeitskarosserien ablaufoptimiert sortiert werden.

Der Transport der Fahrzeugkarosserien 102 von dem zweiten Förderniveau 106 auf das erste Förderniveau 104 erfolgt innerhalb des ersten Hochregallagers 108, mittels der Regalbediengeräte 170.

Nach Verlassen des ersten Hochregallagers 108 auf dem ersten Förderniveau 104 werden die Fahrzeugkarosserien 102 in dem zweiten Prozessabschnitt 230 der Lackieranlage 100 abgedichtet, mit Unterbodenschutz versehen, dann von dem ersten Förderniveau 104 auf das zweite Förderniveau 106 angehoben und auf dem zweiten Förderniveau 106 mit einem Füller lackiert, der anschließend getrocknet wird.

Nach Trocknung des Füllers werden die Fahrzeugkarosserien 102 von dem zweiten Förderniveau 106 auf das dritte Förderniveau 218 der Lackieranlage angehoben und in das zweite Hochregallager 110 hinein gefördert.

Auf dem dritten Förderniveau 218 der Lackieranlage befinden sich keine Prozessvorrichtungen oder Behandlungsbereiche, sondern nur Fördervorrichtungen der Lackieranlage 100.

Bevor die Fahrzeugkarosserien 102 das zweite Hochregallager 110 auf dem zweiten Förderniveau 106 wieder verlassen, können sie in Karosserie-Lagerfächern 171 des zweiten Hochregallagers 110 zwischengelagert werden.

Eine Änderung der Behandlungsreihenfolge der Fahrzeugkarosserien 102 kann im zweiten Hochregallager 110 ebenso vorgenommen werden wie im ersten Hochregallager 108.

Der Transport der Fahrzeugkarosserien 102 von dem dritten Förderniveau 218 auf das zweite Förderniveau 106 der Lackieranlage 100 erfolgt innerhalb des zweiten Hochregallagers 110 mittels der Regalbediengeräte 170.

Nachdem die Fahrzeugkarosserien 102 das zweite Hochregallager 110 auf dem zweiten Förderniveau 106 verlassen haben, werden dieselben im dritten Prozessabschnitt 300 der Lackieranlage 100 auf die Decklackierung vorbereitet, beispielsweise durch Abschleifen, und anschließend mit einem Grundlack versehen. Der Grundlack wird zwischengetrocknet, bevor die Fahrzeugkarosserien 102 mit Klarlack lackiert werden und der gesamte Decklack getrocknet wird.

Die Lackierung mit Grundlack und Klarlack kann mittels Spritzrobotern oder manuell oder teilweise mittels Spritzrobotern und teilweise manuell erfolgen.

Anschließend werden die Fahrzeugkarosserien 102 auf dem zweiten Förderniveau 106 in das dritte Hochregallager 112 hinein gefördert.

Bevor die Fahrzeugkarosserien 102 auf dem ersten Förderniveau 104 aus dem dritten Hochregallager 112 heraus gefördert werden, können dieselben in Karosserie-Lagerfächern 171 des dritten Hochregallagers 112 zwischengelagert werden.

Dabei kann die Behandlungsreihenfolge der Fahrzeugkarosserien 102 im dritten Hochregallager 112 in derselben Weise geändert werden wie im ersten Hochregallager 108 und im zweiten Hochregallager 110.

Die Fahrzeugkarosserien 102 werden in dem dritten Hochregallager 112 mittels der Regalbediengeräte 170 des dritten Hochregallagers 112 von dem zweiten Förderniveau 106 auf das erste Förderniveau 104 transportiert.

Nachdem die Fahrzeugkarosserien 102 das dritte Hochregallager 112 auf dem ersten Förderniveau 104 verlassen haben, werden die Fahrzeugkarosserien 102 im vierten Prozessabschnitt 316 der Lackieranlage 100 fertiggestellt und kontrolliert, gegebenenfalls nachbearbeitet und schließlich am Ausgang 308 der Lackieranlage 100 an eine nachfolgende Endmontageanlage übergeben.

Die meisten auf dem ersten Förderniveau 104 der Lackieranlage 100 angeordneten Behandlungsbereiche, insbesondere die Nahtabdichtbereiche 188, die offenen Arbeitsplätze der Unterbodenschutz-Beschichtungsanlagen 190, die Feinabdichtbereiche 192, die Fertigstellungs-und-Inspektions-Bereiche 304 und der Nacharbeits-Vorbereitungsbereich 312 sind offene Behandlungsbereiche und offene Arbeitsplätze, welche zum Gebäudeinnenraum 132 der Gebäudehülle 116 hin geöffnet und nicht durch Trennwände von dem Gebäudeinnenraum 132 abgetrennt sind.

Die Unterbodenschutz-Applikationskabinen 191 auf dem ersten Förderniveau 104 der Lackieranlage und die auf dem zweiten Förderniveau 106 der Lackieranlage angeordneten Behandlungsbereiche, insbesondere die Vorbehandlungsanlage 138, die KTL-Anlage 146, der KTL-Durchlauftrockner 152 mit der Kühlzone 154, die Füller-Spritzkabine 202, die Füller-Durchlauftrockner 204 mit den Kühlzonen 206, die Decklack-Vorbereitungskabinen 272, die Grundlack-Spritzkabinen 274, die Zwischen-Durchlauftrockner 276, die Kühlzonen 280, die Klarlack-Spritzkabinen 282, die Abdunstzonen 284 und die Decklack-Durchlauftrockner 286 mit den Kühlzonen 288 sind geschlossene Behandlungsbereiche, welche von dem Gebäudeinnenraum 132 der Gebäudehülle durch Kabinen- oder Trocknerwände getrennt sind.

Der Transport der Fahrzeugkarosserien 102 durch die Vorbehandlungsanlage 138, die KTL-Anlage 146 und die Unterbodenschutz-Beschichtungsanlagen 190 kann mittels Hängeförderern, der Transport der Fahrzeugkarosserien 102 durch die übrigen offenen oder geschlossenen Behandlungsbereiche und zwischen den Behandlungsbereichen sowie zu und von den Hochregallagern 108, 110 und 112 kann mittels Rollenbahnen erfolgen.

Bei der vorstehend beschriebenen Lackieranlage 100 erfolgt der Transport der Fahrzeugkarosserien 102 von einem der Hochregallager 108 oder 110 in das jeweils nachfolgende Hochregallager 110 bzw. 112 stets über den jeweils dazwischenliegenden Prozessabschnitt 230 bzw. 300; ein direkter Transport von Fahrzeugkarosserien 102 von einem der Hochregallager in ein anderes Hochregallager oder auch ein Rücktransport von Fahrzeugkarosserien 102 entgegen der Durchlaufrichtung des Förderweges 134 sind nicht vorgesehen.

## Patentansprüche

1. Zwischenlager (107) zum Zwischenlagern von zu lackierenden Gegenständen in Form von Fahrzeugkarosserien (102) und/oder von Teilen von Fahrzeugkarosserien und/oder zum Fördern von zu lackierenden Gegenständen in Form von Fahrzeugkarosserien (102) und/oder von Teilen von Fahrzeugkarosserien von einem Prozessabschnitt (184, 230, 300) einer Lackieranlage (100) zu einem anderen Prozessabschnitt (230, 300, 316) der Lackieranlage (100), wobei das Zwischenlager (107) mehrere wahlfrei belegbare Lagerfächer (171) für zu lackierende Gegenstände umfasst,
**dadurch gekennzeichnet,**
**dass** das Zwischenlager (107) mit einem Gehäuse (164) versehen ist, welches das Zwischenlager (107) von dem Gebäudeinnenraum (132) einer Gebäudehülle (116), in welcher das Zwischenlager (107) angeordnet ist, abtrennt,
**dass** das Zwischenlager (107) als ein Reinraumbereich ausgebildet ist und
**dass** innerhalb des Zwischenlagers (107) ein Luft-Überdruck erzeugbar ist.

2. Zwischenlager (107) nach Anspruch 1, **dadurch gekennzeichnet, dass** das Zwischenlager (107) als ein Hochregallager (108, 110, 112) ausgebildet ist.

3. Zwischenlager (107) nach einem der Ansprüche 1 oder 2, **dadurch gekennzeichnet, dass** das Zwischenlager (107) mindestens einen Eingangstunnel (162, 222, 294) umfasst.

4. Zwischenlager (107) nach einem der Ansprüche 1 bis 3, **dadurch gekennzeichnet, dass** das Zwischenlager (107) mindestens einen Ausgangstunnel (180, 228, 296) umfasst.

5. Zwischenlager (107) nach Anspruch 4, **dadurch gekennzeichnet, dass** das Zwischenlager (107) mindestens einen Eingangstunnel (162, 222, 294) und mindestens einen Ausgangstunnel (180, 228, 296) umfasst, wobei mindestens ein Eingangstunnel und mindestens ein Ausgangstunnel des Zwischenlagers (107) auf unterschiedlichen Höhen liegen.

6. Zwischenlager (107) nach einem der Ansprüche 1 bis 5, **dadurch gekennzeichnet, dass** das Zwischenlager (107) mindestens eine Schleuse (256) und mindestens eine Vorrichtung (232) zum Erzeugen eines Luftstroms durch die Schleuse (256) umfasst.

7. Zwischenlager (107) nach einem der Ansprüche 1 bis 6, **dadurch gekennzeichnet, dass** das Zwischenlager (107) mindestens ein Lagerfach (171) umfasst, das mit einer Abdeckung (264) zum Schutz eines an einem Lagerplatz des Zwischenlagers (107) angeordneten zu lackierenden Gegenstandes versehen ist.

8. Zwischenlager (107) nach Anspruch 7, **dadurch gekennzeichnet, dass** die Abdeckung (264) eine Abdeckfolie umfasst.

9. Lackieranlage (100) zum Lackieren von zu lackierenden Gegenständen in Form von Fahrzeugkarosserien (102) und/oder von Teilen von Fahrzeugkarosserien, umfassend mindestens ein Zwischenlager (107) nach einem der Ansprüche 1 bis 8.

10. Lackieranlage (100) nach Anspruch 9, **dadurch gekennzeichnet, dass** die Lackieranlage (100) eine Gebäudehülle (116) umfasst, die einen Gebäudeinnenraum (132) umschließt, in welchem mindestens ein Behandlungsbereich zum Behandeln eines zu lackierenden Gegenstandes und das mindestens eine Zwischenlager angeordnet ist.

11. Lackieranlage (100) nach Anspruch 10, **dadurch gekennzeichnet, dass** die Lackieranlage (100) ein erstes Förderniveau (104), auf dem zu lackierende Gegenstände durch mindestens einen offenen Behandlungsbereich (188, 190, 192, 304, 312) förderbar sind, und mindestens ein zweites Förderniveau (106), von dem aus zu lackierende Gegenstände in mindestens ein Tauchbecken (140, 148) eintauchbar sind,
umfasst,
wobei mindestens ein zu lackierender Gegenstand von einem Förderniveau (104, 106, 218) der Lackieranlage (100) in das Zwischenlager (107) hinein und später aus dem Zwischenlager (107) heraus in ein anderes Förderniveau (106, 104) der Lackieranlage (100) förderbar ist.

12. Lackieranlage (100) nach Anspruch 11, **dadurch gekennzeichnet, dass** mindestens ein zu lackierender Gegenstand aus einem Trockner (152, 204, 286) auf dem zweiten Förderniveau (106) in das Zwischenlager (107) hinein förderbar ist.

13. Lackieranlage (100) nach einem der Ansprüche 11 oder 12, **dadurch gekennzeichnet, dass** die Lackieranlage (100) mindestens zwei Zwischenlager (107) umfasst, mittels welcher zu lackierende Gegenstände von einem Förderniveau (104, 106, 218) der Lackieranlage (100) auf ein anderes Förderniveau (106, 104) der Lackieranlage (100) förderbar sind.

## Claims

1. An interim store (107) for the interim storage of articles to be painted, in the form of vehicle bodies (102) and/or parts of vehicle bodies, and/or for conveying articles to be painted, in the form of vehicle bodies (102) and/or parts of vehicle bodies, from a processing section (184, 230, 300) of a painting system (100) to another processing section (230, 300, 316) of the painting system (100), wherein the interim store (107) includes a plurality of selectively occupiable storage compartments (171) for articles to be painted, **characterised**
**in that** the interim store (107) is provided with a housing (164) that separates the interim store (107) from the building interior (132) of a building shell (116) in which the interim store (107) is arranged,
**in that** the interim store (107) takes the form of a clean room area, and
**in that** a positive air pressure is producible within the interim store (107).

2. An interim store (107) according to Claim 1, **characterised in that** the interim store (107) takes the form of a high-bay storage unit (108, 110, 112).

3. An interim store (107) according to one of Claims 1 or 2, **characterised in that** the interim store (107) includes at least one entrance tunnel (162, 222, 294).

4. An interim store (107) according to one of Claims 1 to 3, **characterised in that** the interim store (107) includes at least one exit tunnel (180, 228, 296).

5. An interim store (107) according to Claim 4, **characterised in that** the interim store (107) includes at least one entrance tunnel (162, 222, 294) and at least one exit tunnel (180, 228, 296), wherein at least one entrance tunnel and at least one exit tunnel of the interim store (107) are at different heights.

6. An interim store (107) according to one of Claims 1 to 5, **characterised in that** the interim store (107) includes at least one air lock (256) and at least one device (232) for producing an air flow through the air lock (256).

7. An interim store (107) according to one of Claims 1 to 6, **characterised in that** the interim store (107) includes at least one storage compartment (171) that is provided with a cover (264) for protecting an article to be painted that is arranged at a storage location of the interim store (107).

8. An interim store (107) according to Claim 7, **characterised in that** the cover (264) includes a covering film.

9. A painting system (100) for painting articles to be painted, in the form of vehicle bodies (102) and/or parts of vehicle bodies, including at least one interim store (107) according to one of Claims 1 to 8.

10. A painting system (100) according to Claim 9, **characterised in that** the painting system (100) includes a building shell (116) that surrounds a building interior (132) in which there are arranged at least one treatment area for treating an article to be painted and the at least one interim store.

11. A painting system (100) according to Claim 10, **characterised in that** the painting system (100) includes a first conveying level (104) on which articles to be painted are conveyable through at least one open treatment area (188, 190, 192, 304, 312), and at least one second conveying level (106) from which articles to be painted are dippable in at least one dip bath (140, 148), wherein at least one article to be painted is conveyable from one conveying level (104, 106, 218) of the painting system (100) into the interim store (107) and is conveyable later out of the interim store (107) and onto another conveying level (106, 104) of the painting system (100).

12. A painting system (100) according to Claim 11, **characterised in that** at least one article to be painted is conveyable out of a drier (152, 204, 286) on the second conveying level (106) and into the interim store (107).

13. A painting system (100) according to one of Claims 11 or 12, **characterised in that** the painting system (100) includes at least two interim stores (107), by means of which articles to be painted are conveyable from one conveying level (104, 106, 218) of the painting system (100) onto another conveying level (106, 104) of the painting system (100).

## Revendications

1. Système de stockage intermédiaire (107) pour le stockage intermédiaire d'objets à peindre qui se présentent sous forme de carrosseries de véhicules (102) et/ou d'éléments de carrosseries de véhicules et/ou pour le transport d'objets à peindre qui se présentent sous forme de carrosseries de véhicules (102) et/ou d'éléments de carrosseries de véhicules provenant d'une section de traitement (184, 230, 300) d'une installation de mise en peinture (100) vers une autre section de traitement (230, 300, 316) de l'installation de mise en peinture (100), le système de stockage intermédiaire (107) comportant plusieurs compartiments de stockage (171) pour objets à peindre, pouvant être garnis au choix, **caractérisé en ce que** le système de stockage intermédiaire (107) est muni d'une boîtier enceinte (164) qui le sépare de l'intérieur de bâtiment (132) d'une enveloppe de bâtiment (116) dans laquelle est disposé le système de stockage intermédiaire (107), **en ce que** le système de stockage intermédiaire (107) est configuré en tant que salle blanche et **en ce qu'**une surpression d'air peut être générée à l'intérieur du système de stockage intermédiaire (107).

2. Système de stockage intermédiaire (107) selon la revendication 1, **caractérisé en ce que** le système de stockage intermédiare (107) est configuré en tant que système de stockage de grande hauteur (108, 110, 112).

3. Système de stockage intermédiaire (107) selon l'une quelconque des revendications 1 ou 2, **caractérisé en ce que** le système de stockage intermédiaire (107) comporte au moins un tunnel d'entrée (162, 222, 294).

4. Système de stockage intermédiaire (107) selon l'une quelconque des revendications 1 à 3, **caractérisé en ce que** le système de stockage intermédiaire (107) comporte au moins un tunnel de sortie (180, 228, 296).

5. Système de stockage intermédiaire (107) selon la revendication 4, **caractérisé en ce que** le système de stockage intermédiaire (107) comporte au moins un tunnel d'entrée (162, 222, 294) et au moins un tunnel de sortie (180, 228, 296), au moins un tunnel d'entrée et au moins un tunnel de sortie du système de stockage intermédiaire (107) étant situés à des hauteurs différentes.

6. Système de stockage intermédiaire (107) selon l'une quelconque des revendications 1 à 5, **caractérisé en ce que** le système de stockage intermédiaire (107) comporte au moins un sas (256) et au moins un dispositif (232) pour produire un courant d'air à travers le sas (256).

7. Système de stockage intermédiaire (107) selon l'une quelconque des revendications 1 à 6, **caractérisé en ce que** le système de stockage intermédiaire comporte au moins un compartiment de stockage (171) doté d'un recouvrement (264) destiné à la protection d'un objet à peindre disposé sur un emplacement de stockage du système de stockage intermédiaire (107).

8. Système de stockage intermédiaire (107) selon la revendication 7, **caractérisé en ce que** le recouvrement (264) comporte un film de recouvrement.

9. Installation de mise en peinture (100) pour la mise en peinture d'objets à peindre qui se présentent sous forme de carrosseries de véhicules (102) et/ou d'éléments de carrosseries de véhicules, comportant au moins un système de stockage intermédiaire (107) selon l'une quelconque des revendications 1 à 8.

10. Installation de mise en peinture (100) selon la revendication 9, **caractérisée en ce que** l'installation de mise en peinture (100) comporte une enveloppe de bâtiment (116) qui entoure l'intérieur (132) d'un bâtiment dans lequel sont disposés au moins une zone de traitement pour le traitement d'un objet à peindre et au moins un système de stockage intermédiaire.

11. Installation de mise en peinture (100) selon la revendication 10, **caractérisée en ce que** l'installation de mise en peinture (100) comporte un premier niveau d'acheminement (104), vers lequel les objets à peindre peuvent être acheminés à travers au moins une zone de traitement ouverte (188, 190, 192, 304, 312), et au moins un deuxième niveau d'acheminement (106) depuis lequel les objets à peindre peuvent être plongés dans au moins un bassin d'immersion (140, 148), au moins un objet à peindre pouvant être acheminé depuis un niveau d'acheminement (104, 106, 218) de l'installation de mise en peinture (100) vers le système de stockage intermédiaire (107) et, plus tard, depuis le système de stockage intermédiaire (107) vers un autre niveau d'acheminement (106, 104) de l'installation de mise en peinture (100).

12. Installation de mise en peinture (100) selon la revendication 11, **caractérisée en ce qu'**au moins un objet à peindre peut être acheminé depuis un sécheur (152, 204, 286) sur le deuxième niveau d'acheminement (106) vers le système de stockage intermédiaire (107).

13. Installation de mise en peinture (100) selon l'une quelconque des revendications 11 ou 12, **caractérisée en ce que** l'installation de mise en peinture (100) comporte au moins deux systèmes de stockage intermédiaire (107) au moyen desquels des objets à peindre peuvent être acheminés depuis un niveau d'acheminement (104, 106, 218) de l'installation de mise en peinture (100) vers un autre niveau d'acheminement (106, 104) de l'installation de mise en peinture (100).
